# EUROPEAN PATENT APPLICATION

(11) **EP 4 661 248 A1**
(43) Date of publication of application: **10.12.2025**
(21) Application number: 23919915.1
(22) Date of filing: 05.12.2023
(51) Int. Cl.: H02J 50/80, B60L 5/00, B60L 53/126, B60L 53/65, B60L 53/66, B60L 53/67, B60M 7/00, G16Y 10/40, G16Y 40/35, H02J 7/00, H02J 50/10, H02J 50/12, H02J 50/40, H02J 50/90, H04W 84/10

(54) **WIRELESS POWER TRANSMISSION SYSTEM, SUPPLY DEVICE, AND VEHICLE**

(30) Priority: 31.01.2023 JP 2023013400; 07.06.2023 JP 2023094317
(71) Applicant: TOYOTA JIDOSHA KABUSHIKI KAISHA, Toyota-shi Aichi 471-8571 (JP); DENSO CORPORATION, Kariya-shi, Aichi 448-8661 (JP)
(72) Inventor: HASHIMOTO, Toshiya, Toyota-shi, Aichi 471-8571 (JP); MAEMURA, Masato, Toyota-shi, Aichi 471-8571 (JP); TSUGE, Shogo, Toyota-shi, Aichi 471-8571 (JP); IKEMURA, Ryosuke, Toyota-shi, Aichi 471-8571 (JP); KANESAKI, Masaki, Kariya-shi, Aichi 448-8661 (JP); SUMIYA, Hayato, Kariya-shi, Aichi 448-8661 (JP); YAMAGUCHI, Nobuhisa, Kariya-shi, Aichi 448-8661 (JP); OBAYASHI, Kazuyoshi, Kariya-shi, Aichi 448-8661 (JP); TANI, Keisuke, Kariya-shi, Aichi 448-8661 (JP)
(74) Representative: D Young & Co LLP
(86) International application number: PCT/JP2023/043530
(87) International publication number: WO 2024/161780

(57) **Abstract**

A wireless power transfer system according to the present invention includes: a supply device having a primary coil installed on a road; a vehicle having a secondary coil that receives power transferred in a non-contact manner from the primary coil; and a server communicably connected to the supply device and the vehicle by wide-area wireless communication, in which the supply device transmits identification information of the supply device to the server before receiving a signal from the vehicle by narrow-area wireless communication, the server transmits a compatibility list including a combination of the compatible supply device and vehicle to the supply device on the basis of identification information of the supply device and information of the vehicle, and the supply device performs pairing with the vehicle on the basis of the compatibility list in a case of receiving the signal from the vehicle by the narrow-area wireless communication.

## Description

### Field

The present invention relates to a wireless power transfer system, a supply device, and a vehicle.

### Background

Patent Literature 1 discloses a wireless power transfer system that transfers power to a traveling vehicle in a non-contact manner, in which the traveling vehicle and a server are communicably connected and traveling assistance information is provided from the server to the traveling vehicle. The traveling assistance information is information for improving charging efficiency of the power transferred from the supply device in a traveling lane, and includes a traveling position and a vehicle speed of the vehicle which position and speed satisfy a condition in which the charging efficiency is equal to or greater than a predetermined value.

### Citation List

### Patent Literature

Patent Literature 1: Japanese Laid-open Patent Publication No. 2015-228047

### Summary

### Technical Problem

In a system that transfers power from a ground-side supply device to a traveling vehicle in a non-contact manner, communication between a server and the ground-side supply device (wide-area wireless communication) is performed separately from communication between the server and the vehicle (wide-area wireless communication). However, in a case where compatibility check or pairing is performed by communication between the vehicle and the supply device via the server (wide-area wireless communication), there is room for development as to a processing procedure to be performed in order to achieve both high responsiveness and reduction in traffic.

The present invention has been made in view of the above circumstances, and an object thereof is to provide a wireless power transfer system, a supply device, and a vehicle that can increase responsiveness and reduce traffic in a case where each of a ground-side supply device and a traveling vehicle wirelessly communicates with a server.

### Solution to Problem

A wireless power transfer system according to the present invention includes: a supply device having a primary coil installed on a road; a vehicle having a secondary coil that receives power transferred from the primary coil in a non-contact manner; and a server communicably connected to the supply device and the vehicle by wide-area wireless communication. Further, the supply device and the vehicle can communicate with each other by narrow-area wireless communication, and the supply device transfers power in the non-contact manner to the vehicle traveling on the road, the supply device transmits identification information of the supply device to the server before receiving a signal from the vehicle by the narrow-area wireless communication, the server transmits, to the supply device, a compatibility list including a combination of the compatible supply device and vehicle on a basis of the identification information of the supply device and information of the vehicle, and the supply device performs pairing with the vehicle on a basis of the compatibility list in a case of receiving the signal from the vehicle by the narrow-area wireless communication.

According to this configuration, since the wide-area wireless communication with the server is not necessary at timing at which the supply device and the vehicle are paired, high responsiveness can be secured. In addition, since the compatibility list narrowed down to compatible vehicle information is transmitted from the server to the supply device, the traffic between the server and the supply device can be reduced.

The signal received by the supply device from the vehicle through the narrow-area wireless communication may be identification information of the vehicle, the compatibility list may include the identification information of the vehicle, and the supply device may perform the pairing with the compatible vehicle on a basis of the identification information of the vehicle which information is acquired from the vehicle by the narrow-area wireless communication and the compatibility list acquired from the server in advance by the wide-area wireless communication.

According to this configuration, the supply device can perform a compatibility check and pairing by receiving vehicle identification information from a vehicle via narrow-area wireless communication.

The server may register, in a case of receiving vehicle identification information transmitted from the vehicle capable of receiving power, the vehicle identification information in an identification information list including vehicle information associated with the vehicle identification information, and may extract the information of the vehicle compatible with the supply device from the identification information list and generates the compatibility list in a case where the identification information of the supply device is received.

According to this configuration, since pairing is performed with reference to the compatibility list that is information extracted from the identification information list, high responsiveness can be secured.

The server may specify the vehicle located in a neighboring region of the supply device on a basis of position information of the supply device and position information of the vehicle, and may transmit the compatibility list focused on the information of the specified vehicle to the supply device corresponding to the neighboring region.

According to this configuration, since the information can be narrowed down on the basis of the position information between the vehicle and the supply device, traffic in the wide-area wireless communication can be reduced.

The server may transmit, to the specified vehicle, a compatibility token compatible with the supply device corresponding to the neighboring region, and may transmit the compatibility token to the supply device corresponding to the neighboring region, the vehicle may transmit information related to the compatibility token to the supply device by the narrow-area wireless communication, and the supply device may perform a power supply operation with respect to the vehicle in a case where compatibility between the compatibility token received from the server and the information that is related to the compatibility token and received from the vehicle is confirmed.

According to this configuration, since the supply device can authenticate the vehicle by using a compatibility token, security is improved.

The supply device may transmit supply device information including the identification information and the position information of the supply device to the server at time of being laid on ground, and may transmit change information of the position information to the server in a case where the position information is changed after the laying on the ground, and the server may specify the vehicle located in the neighboring region by using the supply device information, and may update the compatibility list on a basis of the change information of the position information in a case where the change information of the position information is received.

According to this configuration, since the information is transmitted from the supply device to the server when the position information of the supply device is changed, frequency of transmitting the information from the supply device to the server can be controlled.

The vehicle may be capable of transmitting and receiving vehicle information by vehicle-to-vehicle communication with another vehicle traveling near the vehicle, a vehicle representing a plurality of the vehicles capable of performing the vehicle-to-vehicle communication may collectively transmit the vehicle information of each of the plurality of vehicles to the server, the server may transmit the compatibility list corresponding to the plurality of vehicles to the representative vehicle in a case of receiving the vehicle information of the plurality of vehicles from the representative vehicle, and in a case of receiving the compatibility list corresponding to the plurality of vehicles from the server, the representative vehicle may transmit the compatibility list to the plurality of vehicles that has performed the vehicle-to-vehicle communication.

According to this configuration, a representative vehicle of a plurality of vehicles communicates with the server, and communication frequency between the server and the vehicle can be reduced since the communication by the representative vehicle becomes a hub.

The server may update the compatibility list or the compatibility token every time predetermined time elapses.

According to this configuration, a side of the server serves as an update trigger, and the information can be automatically updated periodically by the server.

The vehicle may transmit the information of the vehicle to the server every time predetermined time elapses.

According to this configuration, a side of the vehicle serves as the update trigger, and the vehicle information can be periodically transmitted to the server.

The vehicle may transmit the information of the vehicle to the server in a case where the vehicle has traveled a predetermined traveling distance or in a case where the vehicle has entered the neighboring region of the supply device.

According to this configuration, the side of the vehicle serves as the update trigger, and the vehicle information can be transmitted to the server according to a movement state of the vehicle.

The vehicle may transmit the information of the vehicle to the server when the own vehicle is activated, and may transmit an information deletion request signal to the server when traveling of the own vehicle ends, and in a case of receiving the information deletion request signal, the server may delete, from the compatibility list, information related to the vehicle that has transmitted the request signal.

According to this configuration, since a deletion signal is transmitted from the side of the vehicle according to a vehicle state, an amount of information of the compatibility list transmitted to the supply device can be reduced by deletion of unnecessary vehicle information from the compatibility list.

The server may include a first management server that manages the information of the vehicle which information is transmitted from the vehicle, a second management server that manages information of the supply device which information is transmitted from the supply device, and a third management server that manages information related to a wireless power transfer by the vehicle and the supply device, and the third management server may acquire, from the first management server, information related to the wireless power transfer in the information of the vehicle, acquire, from the second management server, information related to the wireless power transfer in the information of the supply device, and generate the compatibility list on a basis of the information acquired from the first management server and the second management server.

According to this configuration, information processing related to the wireless power transfer can be performed with functions being distributed to a plurality of servers.

A supply device according to the present invention includes: a primary device including a primary coil installed on a road; a first communication device that performs narrow-area wireless communication with a vehicle; a second communication device that performs wide-area wireless communication with a server; and a control device that controls the primary device, the first communication device, and the second communication device. Further, the supply device transfers power in a non-contact manner from the primary coil to the vehicle traveling on the road, the second communication device transmits identification information of the supply device to the server before the first communication device receives a signal from the vehicle by the narrow-area wireless communication, and receives, from the server, a compatibility list in which information of the vehicle compatible with the supply device is listed, and the control device performs pairing with the vehicle on a basis of the compatibility list in a case where the first communication device receives the signal from the vehicle by the narrow-area wireless communication.

According to this configuration, since the wide-area wireless communication with the server is not necessary at the timing at which the supply device is paired with the vehicle, high responsiveness can be secured. In addition, since the compatibility list narrowed down to compatible vehicle information is transmitted from the server to the supply device, the traffic between the server and the supply device can be reduced.

The second communication device may receive, from the server, the compatibility list narrowed down to the information of the vehicle specified as the vehicle located in a neighboring region of the supply device.

According to this configuration, since the information can be narrowed down on the basis of the position information between the vehicle and the supply device, traffic in the wide-area wireless communication can be reduced.

The second communication device may receive a compatibility token from the server, the first communication device may receive information related to the compatibility token from the vehicle, and the control device may perform a power supply operation on the vehicle in a case where compatibility between the compatibility token received from the server and the information related to the compatibility token and received from the vehicle is confirmed.

According to this configuration, since the supply device can authenticate the vehicle by using a compatibility token, security is improved.

The supply device may transmit supply device information including identification information and position information of the supply device to the server at time of being laid on ground, and may transmit change information of the position information to the server in a case where the position information is changed after the laying on the ground.

According to this configuration, since the information is transmitted from the supply device to the server when the position information of the supply device is changed, frequency of transmitting the information from the supply device to the server can be controlled.

A vehicle according to the present invention includes: a secondary device including a secondary coil that receives power transferred in a non-contact manner from a primary coil installed on a road; a third communication device that performs narrow-area wireless communication with a ground-side supply device including the primary coil; a fourth communication device that performs wide-area wireless communication with a server; and a control device that controls the secondary device, the third communication device, and the fourth communication device. Further, the vehicle receives the power transferred from the primary coil in the non-contact manner while traveling on the road, the fourth communication device transmits, in a case where the vehicle during traveling is in a state of being capable of receiving the power, identification information of the vehicle to the server, the third communication device transmits the identification information of the vehicle to the ground-side supply device while the vehicle is traveling on the road, and the control device performs pairing with the supply device by the narrow-area wireless communication with the supply device.

According to this configuration, since the wide-area wireless communication with the server is not necessary at the timing at which the vehicle is paired with the supply device, high responsiveness can be secured.

The fourth communication device may receive, from the server, a compatibility token for the vehicle located in a neighboring region of the supply device, the third communication device may transmit information related to the compatibility token to the supply device by the narrow-area wireless communication, and the compatibility token may be compatible with the supply device corresponding to the neighboring region.

According to this configuration, since the vehicle transmits the information related to the compatibility token to the supply device, vehicle authentication using the compatibility token can be performed on a side of the supply device. Thus, security is improved.

The third communication device may transmit and receive vehicle information to and from another vehicle traveling near the own vehicle by vehicle-to-vehicle communication, a vehicle representing a plurality of the vehicles capable of performing the vehicle-to-vehicle communication may collectively transmit the vehicle information of the plurality of vehicles to the server, and in a case of receiving a compatibility list corresponding to the plurality of vehicles from the server, the representative vehicle may transmit the compatibility list to the plurality of vehicles that has performed the vehicle-to-vehicle communication.

According to this configuration, a representative vehicle of a plurality of vehicles communicates with the server, and communication frequency between the server and the vehicle can be reduced since the communication by the representative vehicle becomes a hub.

The fourth communication device may transmit information of the vehicle to the server when the own vehicle is activated, and may transmit an information deletion request signal to the server when traveling of the own vehicle ends.

According to this configuration, since a deletion signal is transmitted from the side of the vehicle according to a vehicle state, an amount of information of the compatibility list transmitted to the supply device can be reduced by deletion of unnecessary vehicle information from the compatibility list.

### Advantageous Effects of Invention

In the present invention, since the wide-area wireless communication with the server is not necessary at the timing at which the supply device and the vehicle are paired, high responsiveness can be secured. In addition, since the compatibility list narrowed down to compatible vehicle information is transmitted, traffic between the server and the supply device can be reduced.

### Brief Description of Drawings

FIG. 1 is a schematic diagram illustrating a wireless power transfer system in an embodiment.
FIG. 2 is a view illustrating an overall configuration of the wireless power transfer system.
FIG. 3 is a schematic diagram for describing wide-area wireless communication in the wireless power transfer system.
FIG. 4 is a block diagram for describing a functional configuration of a power transmission ECU.
FIG. 5 is a block diagram for describing a functional configuration of a vehicle ECU.
FIG. 6 is a view for describing a power transfer process.
FIG. 7 is a sequence diagram illustrating a case where communication using the wide-area wireless communication is performed between a vehicle and a supply device.
FIG. 8 is a sequence diagram illustrating an operation after power feeding from the supply device to the vehicle during traveling is terminated.
FIG. 9 is a schematic diagram for describing a flow of information in which flow the wide-area wireless communication and narrow-area wireless communication are used in the wireless power transfer system.
FIG. 10 is a sequence diagram illustrating a case where communication using the wide-area wireless communication is performed between the supply device and a server and a case where communication using the narrow-area wireless communication is performed between the vehicle and the supply device.
FIG. 11 is a sequence diagram illustrating a case where information processing using position information is performed.
FIG. 12 is a sequence diagram illustrating a case where information processing using a compatibility token is performed.
FIG. 13 is a sequence diagram for describing timing of transmitting information of the supply device to the server.
FIG. 14 is a schematic diagram illustrating a case where a vehicle representing a plurality of vehicles performs the wide-area wireless communication with the server.
FIG. 15 is a schematic diagram for describing timing at which information of the vehicle is transmitted to the server.
FIG. 16 is a sequence diagram illustrating a case where vehicle information is deleted.
FIG. 17 is a schematic diagram for describing a case where information processing is performed by a plurality of the servers.

### Description of Embodiments

A wireless power transfer system, a supply device, and a vehicle in an embodiment of the present invention will be specifically described in the following. The present invention is not limited to the embodiment described in the following.

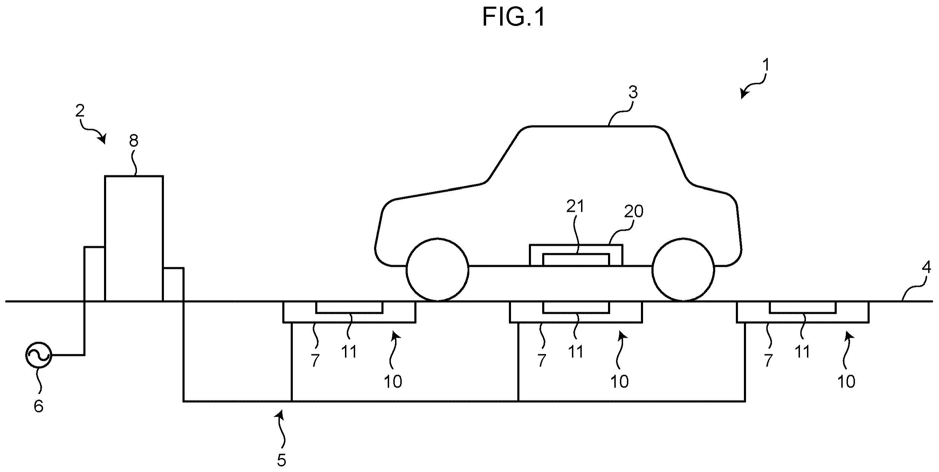

FIG. 1 is a schematic diagram illustrating a wireless power transfer system in the embodiment. A wireless power transfer system 1 includes supply equipment 2 and a vehicle 3. The supply equipment 2 is equipment that supplies power to the traveling vehicle 3 in a non-contact manner. The vehicle 3 is an electric vehicle that can be charged with power supplied from an external power supply, and is, for example, a battery electric vehicle (BEV), a plug-in hybrid electric vehicle (PHEV), or the like.

The wireless power transfer system 1 performs a wireless power transfer from the supply equipment 2 to the vehicle 3 by magnetic field resonance coupling (magnetic field resonance). The wireless power transfer system 1 transfers power from the supply equipment 2 to the vehicle 3 traveling on a road 4 in a non-contact manner. That is, the wireless power transfer system 1 transfers power by a magnetic field resonance system, and realizes power feeding to the vehicle 3 during traveling by using the magnetic field resonance coupling (magnetic field resonance). The wireless power transfer system 1 can be expressed as a dynamic wireless power transfer (D-WPT) system or a magnetic field dynamic wireless power transfer (MF-D-WPT) system.

The supply equipment 2 includes a supply device 5, and an AC power supply 6 that supplies power to the supply device 5. The supply device 5 transfers the power supplied from the AC power supply 6 to the vehicle 3 in the non-contact manner. The AC power supply 6 is, for example, a commercial power supply. The supply device 5 includes a power transmission device 10 having a primary coil 11.

The supply device 5 includes a segment 7 including the primary coil 11, and a management device 8 that manages the segment 7. The segment 7 is embedded in a lane of the road 4. The management device 8 is installed beside the road 4. The segment 7 is electrically connected to the management device 8. The management device 8 is electrically connected to the AC power supply 6, and supplies the power of the AC power supply 6 to the segment 7. The segment 7 is electrically connected to the AC power supply 6 via the management device 8. A plurality of the segments 7 can be arranged along the lane of the road 4. For example, as illustrated in FIG. 1, the supply device 5 includes three segments 7 installed side by side along the lane in the road 4, and one management device 8 to which the three segments 7 are connected. Each of the segments 7 has a function of transferring power from the supply device 5 to the vehicle 3 in the non-contact manner. The management device 8 has a function of controlling the wireless power transfer in the segment 7.

The vehicle 3 includes a power reception device 20 having a secondary coil 21. The power reception device 20 is provided at a bottom of a vehicle body of the vehicle 3. When the vehicle 3 travels on the road 4 on which the primary coil 11 is installed, the primary coil 11 on a ground side and the secondary coil 21 on a vehicle side face each other in a vertical direction. The wireless power transfer system 1 transfers power from the primary coil 11 of the power transmission device 10 to the secondary coil 21 of the power reception device 20 in the non-contact manner while the vehicle 3 is traveling on the road 4.

Traveling in this description means a state in which the vehicle 3 is located on the road 4 for traveling. The traveling includes a state in which the vehicle 3 is temporarily stopped on the road 4. For example, a state in which the vehicle 3 is stopped on the road 4 to wait for a traffic light to change is also included in traveling. On the other hand, even when the vehicle 3 is located on the road 4, for example, in a case where the vehicle 3 is parked/stopped, the state is not included in traveling.

In this description, a lane in which the primary coils 11 (segments 7) are embedded may be referred to as a D-WPT lane, and a place which is a partial section of the road 4 and in which the wireless power transfer by the supply device 5 can be performed may be referred to as a D-WPT charging site. In the D-WPT lane and the D-WPT charging site, the plurality of primary coils 11 (plurality of segments 7) is installed side by side in a traveling direction of the vehicle 3 over a predetermined section of the road 4.

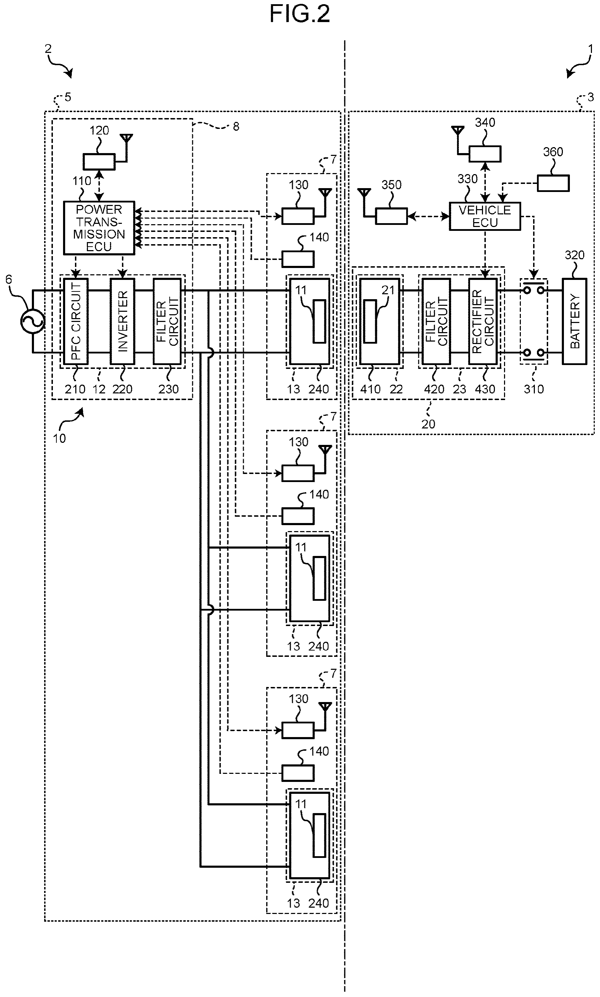

FIG. 2 is a view illustrating an overall configuration of the wireless power transfer system. In the supply equipment 2, the supply device 5 and the AC power supply 6 are electrically connected. In the supply device 5, the segments 7 and the management device 8 are electrically connected.

The supply device 5 includes a configuration provided in the management device 8 and a configuration provided in each of the segments 7. The supply device 5 includes the power transmission device 10, a power transmission electronic control unit (ECU) 110, a first communication device 120, a second communication device 130, and a foreign object detection device 140.

The power transmission device 10 includes an electric circuit connected to the AC power supply 6. The power transmission device 10 includes a power factor collection (PFC) circuit 210, an inverter (INV) 220, a filter circuit 230, and a transmission-side resonant circuit 240.

The PFC circuit 210 improves a power factor of AC power input from the AC power supply 6, converts the AC power into DC power, and performs an output thereof to the inverter 220. The PFC circuit 210 includes an AC/DC converter. The PFC circuit 210 is electrically connected to the AC power supply 6.

The inverter 220 converts the DC power input from the PFC circuit 210 into AC power. Each switching element of the inverter 220 includes an insulated gate bipolar transistor (IGBT), a metal-oxide-semiconductor field effect transistor (MOSFET), or the like, and performs a switching operation according to a control signal from the power transmission ECU 110. For example, an operating frequency of the inverter 220 is 85 kHz. The inverter 220 outputs the converted AC power to the filter circuit 230.

The filter circuit 230 removes noise included in an alternating current input from the inverter 220, and supplies the AC power from which the noise is removed to the transmission-side resonant circuit 240. The filter circuit 230 is an LC filter in which a coil and a capacitor are combined. For example, the filter circuit 230 includes a T-type filter in which two coils and one capacitor are arranged in a T-shape. The PFC circuit 210, the inverter 220, and the filter circuit 230 are included in a power conversion unit 12 of the power transmission device 10.

The transmission-side resonant circuit 240 is a power transmission unit that transfers the AC power supplied from the filter circuit 230 to the power reception device 20 in the non-contact manner. When the AC power is supplied from the filter circuit 230 to the transmission-side resonant circuit 240, current flows through the primary coil 11, and a magnetic field for power transmission is generated.

The transmission-side resonant circuit 240 includes the primary coil 11 and a resonant capacitor. The primary coil 11 is a power transmission coil. The resonant capacitor is connected in series to one end of the primary coil 11, and adjusts a resonance frequency of the transmission-side resonant circuit. The resonance frequency is 10 kHz to 100 GHz, and is preferably 85 kHz. For example, the power transmission device 10 is configured in such a manner that the resonance frequency of the transmission-side resonant circuit 240 and the operating frequency of the inverter 220 match. The transmission-side resonant circuit 240 is included in a primary device 13 of the power transmission device 10.

The power transmission device 10 includes the power conversion unit 12 and the primary device 13. The power conversion unit 12 includes the PFC circuit 210, the inverter 220, and the filter circuit 230. The primary device 13 includes the transmission-side resonant circuit 240. The power transmission device 10 has a configuration in which the power conversion unit 12 is provided in the management device 8 and the primary device 13 is provided in each of the segments 7.

In the supply device 5, the power conversion unit 12 of the power transmission device 10, the power transmission ECU 110, and the first communication device 120 are provided in the management device 8, and the primary device 13 of the power transmission device 10, the second communication device 130, and the foreign object detection device 140 are provided in each of the segments 7.

The power transmission ECU 110 is an electronic control device that controls the supply device 5. The power transmission ECU 110 includes a processor and a memory. The processor includes a central processing unit (CPU), a digital signal processor (DSP), a field-programmable gate array (FPGA), and the like. The memory is a main storage device, and includes a random access memory (RAM), a read only memory (ROM), and the like. The power transmission ECU 110 loads a program stored in a storage unit into a work area of the memory (main storage device) and executes the program, controls each configuration unit and the like through the execution of the program, and realizes a function matching a predetermined purpose. The storage unit includes recording media such as an erasable programmable ROM (EPROM), a hard disk drive (HDD), and a removable medium. As the removable media, there are a universal serial bus (USB) memory, and disc recording media such as a compact disc (CD), a digital versatile disc (DVD), and a Blu-ray (registered trademark) disc (BD). The storage unit can store an operating system (OS), various programs, various tables, various databases, and the like. Signals from various sensors are input to the power transmission ECU 110. A signal from the foreign object detection device 140 is input to the power transmission ECU 110. Then, the power transmission ECU 110 executes various kinds of control on the basis of the signals input from the various sensors.

For example, the power transmission ECU 110 executes power control of adjusting power for power transmission. In the power control, the power transmission ECU 110 controls the power transmission device 10. The power transmission ECU 110 outputs a control signal to the power conversion unit 12 in order to control the power supplied from the power conversion unit 12 to the primary device 13. The power transmission ECU 110 adjusts power for power transmission by controlling a switching element included in the PFC circuit 210, and adjusts the power for the power transmission by controlling the switching elements included in the inverter 220.

The power transmission ECU 110 executes communication control of controlling communication with the vehicle 3. In the communication control, the power transmission ECU 110 controls the first communication device 120 and the second communication device 130.

The first communication device 120 is a ground-side communication device that performs wide-area wireless communication. The first communication device 120 performs wireless communication with the vehicle 3, which is before approaching a WPT lane, among vehicles 3 traveling on the road 4. A state before approaching the WPT lane means that the vehicle 3 is at a position where narrow-area wireless communication with the supply device 5 cannot be performed.

The wide-area wireless communication is communication with a communication distance of 10 meters to 10 kilometers. The wide-area wireless communication is communication having a longer communication distance than the narrow-area wireless communication. As the wide-area wireless communication, various kinds of wireless communication having a long communication distance can be used. For example, communication conforming to communication standards such as 4G, LTE, 5G, and WiMAX formulated by 3GPP (registered trademark) and IEEE is used for the wide-area wireless communication. In the wireless power transfer system 1, vehicle information associated with vehicle identification information (vehicle ID) is transmitted from the vehicle 3 to the supply device 5 by utilization of the wide-area wireless communication.

The second communication device 130 is a ground-side communication device that performs the narrow-area wireless communication. The second communication device 130 performs the wireless communication with the vehicle 3 that has approached or entered the WPT lane among the vehicles 3 traveling on the road 4. A state of approaching the WPT lane means that the vehicle 3 is at a position where the narrow-area wireless communication with the supply device 5 can be performed.

The narrow-area wireless communication is communication with a communication distance of less than 10 meters. The narrow-area wireless communication is communication having a shorter communication distance than wide-area wireless communication. As the narrow-area wireless communication, various kinds of short-range wireless communication having a short communication distance can be used. For example, communication conforming to any communication standard formulated by IEEE, ISO, IEC, or the like is used for the narrow-area wireless communication. As an example, Wi-Fi (registered trademark), Bluetooth (registered trademark), ZigBee (registered trademark), and the like are used for the narrow-area wireless communication. Alternatively, as a technique of performing the narrow-area wireless communication, radio frequency identification (RFID), dedicated short range communication (DSRC), or the like may be used. In the wireless power transfer system 1, the vehicle identification information and the like are transmitted from the vehicle 3 to the supply device 5 by utilization of the narrow-area wireless communication.

The foreign object detection device 140 detects a metal foreign object, a living object, or the like present above the primary coil 11. The foreign object detection device 140 includes, for example, a sensor coil, an imaging device, and the like installed on the ground. The foreign object detection device 140 exerts foreign object detection (FOD) and living object protection (LOP) in the wireless power transfer system 1.

In the supply device 5, the configuration of the power transmission device 10 is divided into the segments 7 and the management device 8, and the three segments 7 are connected to the one management device 8. The power transmission device 10 is configured in such a manner that one inverter supplies power to three transmission-side resonant circuits 240. In the supply device 5, a signal from each of the segments 7 is input to the management device 8. Signals from the second communication device 130 and the foreign object detection device 140 provided in the first segment are input to the power transmission ECU 110. Similarly, signals from the second communication device 130 and the foreign object detection device 140 provided in the second segment are input to the power transmission ECU 110. Signals from the second communication device 130 and the foreign object detection device 140 provided in the third segment are input to the power transmission ECU 110. The power transmission ECU 110 can grasp a state of each of the segments 7 on the basis of the signal input from the segment 7.

The vehicle 3 includes the power reception device 20, a charging relay 310, a battery 320, a vehicle ECU 330, a third communication device 340, a fourth communication device 350, and a global positioning system (GPS) receiver 360.

The power reception device 20 supplies the power received from the power transmission device 10 to the battery 320. The power reception device 20 is electrically connected to the battery 320 via the charging relay 310. The power reception device 20 includes a reception-side resonant circuit 410, a filter circuit 420, and a rectifier circuit 430.

The reception-side resonant circuit 410 is a power reception unit that receives power transferred from the power transmission device 10 in the non-contact manner. The reception-side resonant circuit 410 includes a reception-side resonant circuit including the secondary coil 21 and a resonant capacitor. The secondary coil 21 is a power reception coil that receives the power transferred from the primary coil 11 in the non-contact manner. The resonant capacitor is connected in series to one end of the secondary coil 21, and adjusts a resonance frequency of the reception-side resonant circuit 410. The resonance frequency of the reception-side resonant circuit 410 is determined in such a manner as to match the resonance frequency of the transmission-side resonant circuit 240.

The resonance frequency of the reception-side resonant circuit 410 is the same as the resonance frequency of the transmission-side resonant circuit 240. Thus, when a magnetic field by the transmission-side resonant circuit 240 is generated in a state in which the reception-side resonant circuit 410 faces the transmission-side resonant circuit 240, vibration of the magnetic field is transmitted to the reception-side resonant circuit 410. The primary coil 11 and the secondary coil 21 are brought into a resonance state. When an induced current flows through the secondary coil 21 by electromagnetic induction, induced electromotive force is generated in the reception-side resonant circuit 410. The power transferred from the transmission-side resonant circuit 240 in the non-contact manner in this manner is received by the reception-side resonant circuit 410. Then, the reception-side resonant circuit 410 supplies the power received from the transmission-side resonant circuit 240 to the filter circuit 420. The reception-side resonant circuit 410 is included in a secondary device 22 of the power reception device 20.

The filter circuit 420 removes noise included in an alternating current input from the reception-side resonant circuit 410, and outputs AC power from which the noise is removed to the rectifier circuit 430. The filter circuit 420 is an LC filter in which a coil and a capacitor are combined. For example, the filter circuit 420 includes a T-type filter in which two coils and one capacitor are arranged in a T-shape.

The rectifier circuit 430 converts the AC power input from the filter circuit 420 into DC power and performs an output thereof to the battery 320. The rectifier circuit 430 includes, for example, a full-bridge circuit in which four diodes are full-bridge connected as rectifier elements. A switching element is connected in parallel to each of the diodes of the rectifier circuit 430. Each of the switching elements of the rectifier circuit 430 includes an IGBT, and performs a switching operation according to a control signal from the vehicle ECU 330. The rectifier circuit 430 supplies the converted DC power to the battery 320. The filter circuit 420 and the rectifier circuit 430 are included in a power conversion unit 23 of the power reception device 20.

The power reception device 20 includes the secondary device 22 and the power conversion unit 23. The secondary device 22 includes the reception-side resonant circuit 410. The power conversion unit 23 includes the filter circuit 420 and the rectifier circuit 430.

The charging relay 310 is provided between the rectifier circuit 430 and the battery 320. An open/closed state of the charging relay 310 is controlled by the vehicle ECU 330. The charging relay 310 is controlled to be in the closed state when the battery 320 is charged by the power transmission device 10. In a case where the charging relay 310 is in the closed state, the rectifier circuit 430 and the battery 320 are connected in such a manner as to be energizable. In a case where the charging relay 310 is in the open state, the rectifier circuit 430 and the battery 320 are disconnected from each other in a non-energizable manner. For example, in a case where the charging relay 310 is in the open state, the vehicle 3 does not request power feeding.

The battery 320 is a DC power supply that can be charged, and includes, for example, a lithium-ion battery, a nickel-metal hydride battery, or the like. The battery 320 stores the power supplied from the power transmission device 10 to the power reception device 20. In addition, the battery 320 can supply the power to a motor for traveling of the vehicle 3. The battery 320 is electrically connected to the motor for traveling via a power control unit (PCU). The PCU is a power conversion device that converts the DC power of the battery 320 into AC power, and supplies the AC power to the motor for traveling. Each switching element of the PCU includes an IGBT, and performs a switching operation according to a control signal from the vehicle ECU 330.

The vehicle ECU 330 is an electronic control device that controls the vehicle 3. The vehicle ECU 330 has a hardware configuration similar to that of the power transmission ECU 110. Signals from various sensors mounted on the vehicle 3 are input to the vehicle ECU 330. Furthermore, a positioning signal received by the GPS receiver 360 is input to the vehicle ECU 330. The vehicle ECU 330 can acquire current position information of the vehicle 3 from the GPS receiver 360. Then, the vehicle ECU 330 executes various kinds of control on the basis of the signals input from the various sensors.

For example, the vehicle ECU 330 transfers power from the primary coil 11 to the secondary coil 21 in the non-contact manner, and executes non-contact charging control of storing the power received by the secondary coil 21 into the battery 320. In the non-contact charging control, the vehicle ECU 330 controls the rectifier circuit 430, the charging relay 310, the third communication device 340, and the fourth communication device 350. The non-contact charging control includes power control of controlling charging power and communication control of controlling communication with the supply device 5. In the power control, the vehicle ECU 330 controls the switching elements included in the rectifier circuit 430 and adjusts power (charging power) supplied from the power reception device 20 to the battery 320. In the communication control, the vehicle ECU 330 controls the third communication device 340 and the fourth communication device 350.

The third communication device 340 is a vehicle-side communication device that performs the wide-area wireless communication. The third communication device 340 performs the wireless communication with the first communication device 120 of the supply device 5 in a state before the vehicle 3 traveling on the road 4 approaches the WPT lane. The wide-area wireless communication is bidirectional wireless communication. The communication between the first communication device 120 and the third communication device 340 is performed by high-speed wireless communication.

The fourth communication device 350 is a vehicle-side communication device that performs the narrow-area wireless communication. The fourth communication device 350 performs the wireless communication with the second communication device 130 of the supply device 5 in a state in which the vehicle 3 has approached or entered the WPT lane. The narrow-area wireless communication is unidirectional wireless signaling. The unidirectional wireless signaling is point to point signaling (P2PS). P2PS is used to notify the supply device 5 of the vehicle identification information from the vehicle 3 in each of activities of pairing, an alignment check, a magnetic coupling check, execution of a power transfer, and the termination of the power transfer. In addition, P2PS can be used as a means of the alignment check in a lateral direction. The lateral direction is a width direction of the lane and is a width direction of the vehicle 3.

The GPS receiver 360 detects the current position of the vehicle 3 on the basis of positioning information acquired from a plurality of positioning satellites. The current position information of the vehicle 3 which information is detected by the GPS receiver 360 is transmitted to the vehicle ECU 330.

In the supply device 5, the filter circuit 230 may be included in the management device 8 instead of each of the segments 7. That is, the filter circuit 230 may be installed beside the road 4. In this case, the power conversion unit 12 includes the PFC circuit 210, the inverter 220, and the filter circuit 230, and the primary device 13 includes the transmission-side resonant circuit 240.

The filter circuit 230 may be individually provided in the primary coil 11, or may be collectively provided in a plurality of the primary coils 11.

The filter circuit 230 is not limited to the T-type filter, and may be, for example, a band pass filter in which a coil and a capacitor are connected in series. The same applies to the filter circuit 420 of the vehicle 3.

In the power transmission device 10, a changeover switch that switches the primary coil 11 to be energized may be provided in each of the primary devices 13 when the inverter 220 is connected to the plurality of primary coils 11. The changeover switch may be provided in the management device 8 beside the road 4 or may be provided near each of the primary coils 11.

The transmission-side resonant circuit 240 is not limited to the configuration in which the primary coil 11 and the resonant capacitor are connected in series. The primary coil 11 and the resonant capacitor may be connected in parallel, or may be connected by a combination of a parallel connection and a series connection. In short, the transmission-side resonant circuit 240 only needs to be configured in such a manner that the resonance frequency of the transmission-side resonant circuit 240 matches the operating frequency of the inverter 220, and a connection relationship among the components is not specifically limited. The same applies to the reception-side resonant circuit 410 of the vehicle 3.

The operating frequency of the inverter 220 is not limited to 85 kHz, and may be a frequency around 85 kHz. In short, the operating frequency of the inverter 220 may be a predetermined frequency band including 85 kHz.

The power transmission device 10 may have a configuration in which a plurality of the inverters 220 is connected to an output-side power line (DC power line) of the PFC circuit 210.

The foreign object detection device 140 may be provided not only on the ground side but also on a side of the vehicle 3. For example, in a case where the foreign object detection device on the side of the vehicle 3 detects a foreign object, a living object, or the like present above the primary coil 11, the power feeding request can be stopped until the vehicle 3 passes through the primary coil 11.

In the wireless power transfer system 1, the information transmitted from the vehicle 3 to the supply device 5 by utilization of the narrow-area wireless communication includes the power feeding request, a fed power request value, and the like in addition to the vehicle identification information. The power feeding request is information indicating that a power transfer from the primary coil 11 is requested. The fed power request value is a requested value of an amount of the power transferred from the supply device 5 to the vehicle 3. The vehicle ECU 330 can calculate the fed power request value on the basis of an SOC of the battery 320.

The wireless power transfer system 1 can realize not only a method of feeding power from the ground to the vehicle 3 but also a method of feeding power from the vehicle 3 to the ground. In this case, the rectifier circuit 430 can be replaced with an inverter to realize rectification at the time of the power supply and power reception.

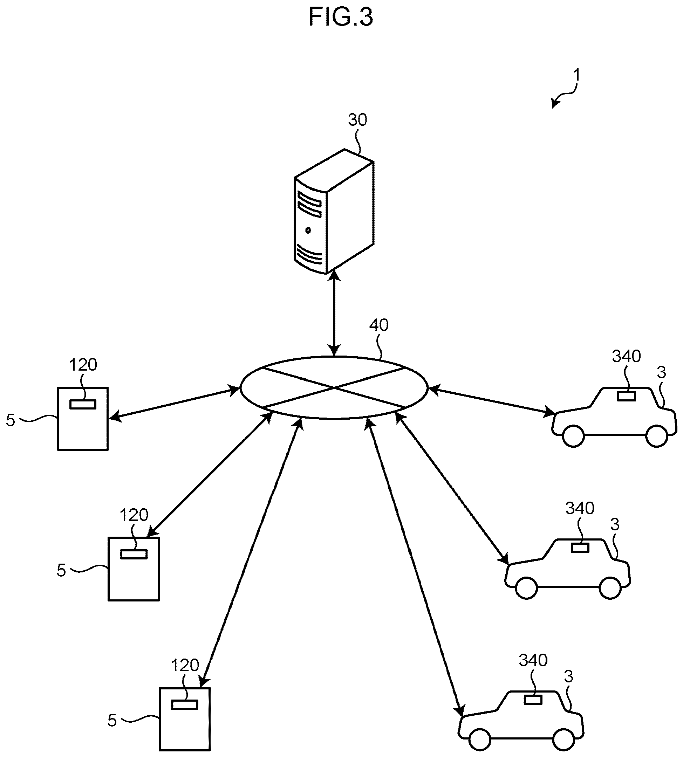

FIG. 3 is a schematic diagram for describing the wide-area wireless communication in the wireless power transfer system.

In the wireless power transfer system 1, the vehicle 3 can communicate with a server 30, and the supply device 5 can communicate with the server 30. The server 30 is connected to a network 40 and can communicate with a plurality of the vehicles 3 and a plurality of the supply devices 5 via the network 40. The network 40 includes a wide area network (WAN) that is a public communication network such as the Internet, a telephone communication network of a mobile phone, and the like.

The vehicle 3 is connected to the network 40 by the wide-area wireless communication using the third communication device 340. The vehicle 3 transmits information to the server 30 and receives information from the server 30.

The supply device 5 is connected to the network 40 by the wide-area wireless communication using the first communication device 120. The supply device 5 transmits information to the server 30 and receives information from the server 30.

The server 30 processes information related to wireless power transfer between the vehicle 3 and the supply device 5. The server 30 includes a communication device and a control device. This control device has a hardware configuration similar to that of the power transmission ECU 110. The server 30 creates various lists related to the wireless power transfer on the basis of the information received from the vehicle 3 and the information received from the supply device 5. Then, the server 30 provides necessary information related to the wireless power transfer to the necessary vehicle 3 and supply device 5 at necessary timing on the basis of the various lists. In the wireless power transfer system 1, communication between the vehicle 3 and the supply device 5 via the server 30 can be performed by utilization of the wide-area wireless communication. The traveling vehicle 3 transmits the vehicle identification information (vehicle ID) to the server 30, and the server 30 transmits vehicle information associated with the vehicle identification information to the supply device 5.

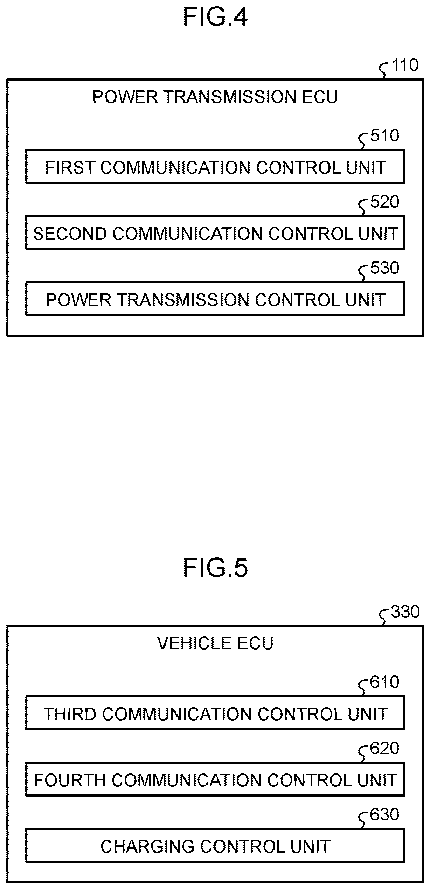

FIG. 4 is a block diagram illustrating a functional configuration of the power transmission ECU. The power transmission ECU 110 includes a first communication control unit 510, a second communication control unit 520, and a power transmission control unit 530.

The first communication control unit 510 executes first communication control of controlling the first communication device 120. The first communication control is to control the wide-area wireless communication on a side of the supply device 5, and controls communication of the supply device 5 using the first communication device 120. That is, the first communication control controls communication of the management device 8 in the supply device 5. The first communication control controls communication between the supply device 5 and the network 40 and also controls communication between the supply device 5 and the server 30 via the network 40. The first communication control unit 510 is a supply equipment communication controller (SECC).

The second communication control unit 520 executes second communication control of controlling the second communication device 130. The second communication control is to control the narrow-area wireless communication on the side of the supply device 5, and controls communication of the supply device 5 using the second communication device 130. That is, the second communication control controls communication of the segment 7 in the supply device 5. The second communication control controls communication between the supply device 5 and the vehicle 3 as communication not via the network 40. The second communication control unit 520 is a primary device communication controller (PDCC).

The power transmission control unit 530 executes power transmission control of controlling the power transmission device 10. The power transmission control is to control power for power transmission, and controls the power conversion unit 12 of the power transmission device 10. The power transmission control unit 530 executes power control of controlling the PFC circuit 210 and the inverter 220.

FIG. 5 is a block diagram illustrating a functional configuration of the vehicle ECU. The vehicle ECU 330 includes a third communication control unit 610, a fourth communication control unit 620, and a charging control unit 630.

The third communication control unit 610 executes third communication control of controlling the third communication device 340. The third communication control is to control the wide-area wireless communication on the side of the vehicle 3, and controls communication of the vehicle 3 using the third communication device 340. The third communication control controls communication between the vehicle 3 and the network 40 and also controls communication between the vehicle 3 and the server 30 via the network 40. The third communication control unit 610 is an EV communication controller (EVCC).

The fourth communication control unit 620 executes fourth communication control of controlling the fourth communication device 350. The fourth communication control is to control the narrow-area wireless communication on the side of the vehicle 3, and controls communication of the vehicle 3 using the fourth communication device 350. The fourth communication control controls communication between the vehicle 3 and the supply device 5 as communication not via the network 40. The fourth communication control unit 620 is a secondary device communication controller (SDCC).

The charging control unit 630 executes charging control of controlling the power reception device 20 and the charging relay 310. The charging control includes power control of controlling reception power in the secondary device 22, and relay control of controlling a connection state between the secondary device 22 and the battery 320. The charging control unit 630 executes power control of controlling the rectifier circuit 430. The charging control unit 630 executes relay control of switching an open/closed state of the charging relay 310.

In the wireless power transfer system 1 configured in such a manner, the wireless power transfer from the supply device 5 to the vehicle 3 is performed in a state in which the wireless communication is established between the vehicle 3 and the supply device 5. In a state in which the vehicle 3 and the supply device 5 are paired by the wireless communication, the power is transferred from the primary coil 11 on the ground side to the secondary coil 21 on the vehicle side in the non-contact manner. Then, in the vehicle 3, charging control of supplying the power received by the secondary coil 21 to the battery 320 is performed.

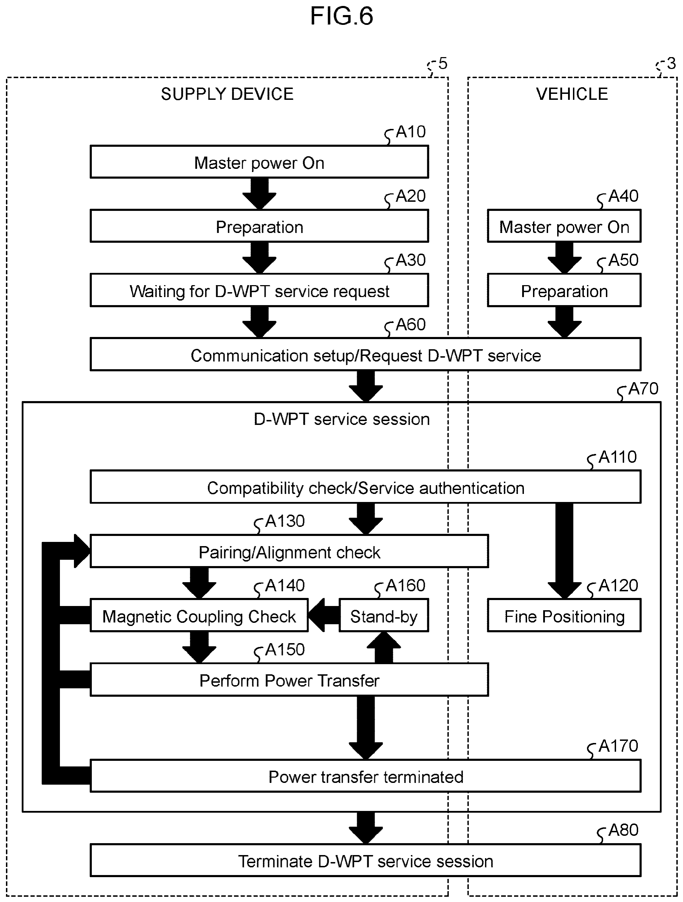

A power transfer process (D-WPT process) will be described with reference to FIG. 6. A power transfer process is a process structured as a chain of a plurality of activities and derived from states and corresponding transitions.

FIG. 6 is a view for describing the power transfer process. In FIG. 6, basic activities for describing the power transfer process are illustrated. Thick arrows illustrated in FIG. 6 represent transition lines. A state of the wireless power transfer system 1 in the power transfer process is represented by the activities included in the power transfer process.

The activities included in the power transfer process include a power transfer service session (D-WPT service session A70) that is an activity in a stage of performing the power transfer, an activity in a stage before performing the power transfer, and an activity in a stage after performing the power transfer. The activities can be described with operation subjects being divided according to presence or absence of the communication between the supply device 5 and the vehicle 3. The activities are divided into what represents a state of only the side of the supply device 5 without communication, what represents a state of only the side of the vehicle 3 without communication, and what represents a state of both the supply device 5 and the vehicle 3 with communication.

As illustrated in FIG. 6, the activities include a master power supply being in an ON state (Master power On) A10, preparation (Preparation) A20, waiting for a request from the vehicle 3 (Waiting for D-WPT service request) A30, the master power supply being in the ON state (Master power On) A40, preparation (Preparation) A50, setting communication (Communication setup) and requesting a D-WPT service (Request D-WPT service) A60, a D-WPT service session (D-WPT service session) A70, and a termination of the D-WPT service session (Terminate D-WPT service session) A80.

The preparation A20 is a preparation state of the supply device 5. In the preparation A20, the supply device 5 activates a circuit and confirms safety without communicating with the vehicle 3. When the master power supply is brought into the ON state A10, the supply device 5 transitions to the state of the preparation A20. Then, in a case where the supply device 5 activates the circuit and can confirm safety in the preparation A20, the state transitions to waiting for a request from the vehicle 3 (Waiting for D-WPT service request) A30. On the other hand, in a case where there is a problem in the supply device 5, the supply device 5 notifies the vehicle 3 of information indicating that the wireless power transfer system 1 cannot be used (unavailability notification) by the wide-area wireless communication. The first communication device 120 transmits the unavailability notification to the vehicle 3.

The preparation A50 is a preparation state of the vehicle 3. In the preparation A50, the vehicle 3 activates a circuit and confirms safety without communicating with the supply device 5. When the master power supply is brought into the ON state A40, the vehicle 3 transitions to the state of the preparation A50. Then, in a case where the vehicle 3 activates the circuit and can confirm safety in the preparation A50, the state transitions to setting communication (Communication setup) and requesting the D-WPT service (Request D-WPT service) A60. On the other hand, in a case where there is a problem in the vehicle 3, the vehicle 3 does not start the wide-area wireless communication and does not perform the subsequent sequence in the D-WPT process.

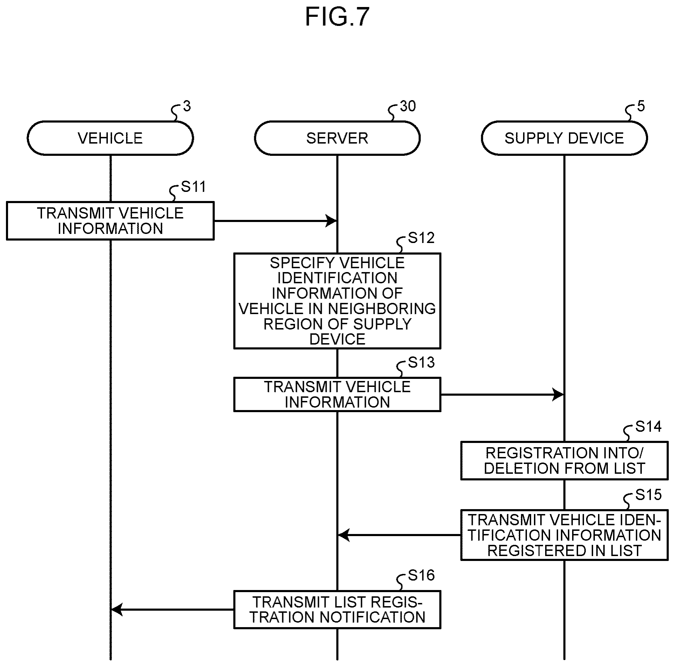

Setting communication and requesting the D-WPT service A60 is started by the vehicle ECU 330. In setting communication and requesting the D-WPT service A60, the vehicle ECU 330 starts the wide-area wireless communication. First, when the vehicle 3 transitions from the preparation A50 to setting communication and requesting the D-WPT service A60, the third communication device 340 transmits a request signal for the D-WPT service. The third communication device 340 performs the wireless communication with the first communication device 120 corresponding to the D-WPT lane that the vehicle 3 is scheduled to enter or has entered. The first communication device 120 to be a communication target is selected on the basis of a relative positional relationship between a current position of the vehicle 3 and a position of the D-WPT lane. On the side of the supply device 5, when the first communication device 120 receives the request signal for the D-WPT service in the state of waiting for the request from the vehicle 3 A30, the state transitions to setting communication and requesting the D-WPT service A60. Various kinds of information of the wide-area wireless communication and the P2PS communication are linked by utilization of the vehicle identification information. A processing sequence of setting communication and requesting the D-WPT service A60 is illustrated in FIG. 7.

FIG. 7 is a sequence diagram illustrating a case where communication using the wide-area wireless communication is performed between the vehicle and the supply device. The vehicle 3 transmits the vehicle information to the server 30 (Step S11). In Step S11, the third communication device 340 of the vehicle 3 transmits the vehicle information to the server 30. The vehicle information includes the vehicle identification information, various parameters of the power reception device 20, current position information of the vehicle 3, and requested power. The vehicle ECU 330 calculates the requested power on the basis of the state of charge (SOC) of the battery 320. In Step S11, the vehicle ECU 330 causes the third communication device 340 to transmit the vehicle information every predetermined time. The predetermined time is set according to a distance from the current position of the vehicle 3 to a starting point of the WPT lane. As the distance from the vehicle 3 to the starting point of the WPT lane becomes shorter, an interval of the predetermined time becomes shorter.

When receiving the vehicle information from the vehicle 3, the server 30 specifies the vehicle identification information of the vehicle 3 located in a neighboring region of the supply device 5 on the basis of the current position information of the vehicle 3 which current position information is included in the vehicle information (Step S12). In Step S12, the server 30 specifies the vehicle 3 located in a predetermined neighboring region from the supply device 5 on the basis of the current position information of the vehicle 3 and position information of the supply device 5. The neighboring region is set to, for example, a region within 500 meters.

When specifying the vehicle identification information of the vehicle 3, the server 30 transmits the vehicle information to the supply device 5 (Step S13). In Step S13, a transmission device of the server 30 transmits the vehicle information to the supply device 5.

When receiving the vehicle information from the server 30, the supply device 5 registers/deletes the vehicle identification information in/from an identification information list (Step S14). In Step S14, the power transmission ECU 110 registers/deletes the vehicle identification information in/from the identification information list in such a manner that the vehicle identification information associated with the vehicle information is registered in the identification information list without excess or deficiency.

After registering/deleting the vehicle identification information in/from the identification information list, the supply device 5 transmits the vehicle identification information registered in the identification information list to the server 30 (Step S15). In Step S15, the first communication device 120 of the supply device 5 transmits the vehicle identification information to the server 30.

When receiving the vehicle identification information from the supply device 5, the server 30 transmits list registration notification to the vehicle 3 corresponding to the vehicle identification information registered in the identification information list (Step S16). In Step S16, a communication device of the server 30 transmits the list registration notification to the vehicle 3. The list registration notification is notification indicating that the vehicle identification information is registered in the identification information list, and includes identification information of the supply device 5 and the position information of the supply device 5.

As described above, when the vehicle 3 starts the wide-area wireless communication and both the supply device 5 and the vehicle 3 are in the state of setting communication and requesting the D-WPT service A60, the communication setting by the wide-area wireless communication is successful. With this successful communication setting, the state transitions to the D-WPT service session (D-WPT service session) A70.

FIG. 6 is referred to again. In the D-WPT service session A70, power is transferred from the transmission-side resonant circuit 240 of the supply device 5 to the reception-side resonant circuit 410 of the vehicle 3 in the non-contact manner in a state in which communication connection is established between the supply device 5 and the vehicle 3. The D-WPT service session A70 starts with the success of the communication setting and terminates by a termination of the communication. When the communication terminates in the state of the D-WPT service session A70, the state transitions to the termination of the D-WPT service session A80.

At the termination of the D-WPT service session A80, the vehicle 3 terminates the wide-area wireless communication with the supply device 5. The vehicle 3 and the supply device 5 can receive a trigger for terminating the D-WPT service session A70. Then, the vehicle ECU 330 prevents the D-WPT from being started for the secondary device 22 and the vehicle 3 until the third communication device 340 receives next notification (request signal for the D-WPT service).

Detailed activities of the D-WPT service session A70 will be described.

The D-WPT service session A70 includes a compatibility check (Compatibility check) and service authentication (Service authentication) A110, fine positioning (Fine Positioning) A120, pairing (Pairing) and an alignment check (Alignment check) A130, a magnetic coupling check (Magnetic Coupling Check) A140, execution of a power transfer (Perform Power Transfer) A150, standing by (Stand-by) A160, and a termination of the power transfer (Power transfer terminated) A170.

The compatibility check and service authentication A110 will be described. After the success of the communication setting, the vehicle ECU 330 and the power transmission ECU 110 confirm that the primary device 13 and the secondary device 22 are compatible. The compatibility check is performed on the side of the supply device 5 on the basis of the information associated with the vehicle identification information acquired by the communication. Check items include a minimum ground clearance of the secondary device 22, a shape type of the reception-side resonant circuit 410, circuit topology of the secondary device 22, a self-resonant frequency of the secondary device 22, the number of the secondary coils 21, and the like.

In the compatibility check and service authentication A110, first, the vehicle 3 transmits compatibility information of the power reception device 20 from the third communication device 340 to the supply device 5. The compatibility information of the power reception device 20 is transmitted by the wide-area wireless communication. The first communication device 120 of the supply device 5 receives the compatibility information of the power reception device 20 from the vehicle 3. Then, the first communication device 120 of the supply device 5 transmits compatibility information of the power transmission device 10 to the vehicle 3. The compatibility information of the power transmission device 10 is transmitted by the wide-area wireless communication. The third communication device 340 of the vehicle 3 receives the compatibility information of the power transmission device 10 from the supply device 5. These pieces of compatibility information can be transmitted and received between the vehicle 3 and the supply device 5 by the wide-area wireless communication via the network 40 and the server 30.

Elements of the compatibility information transmitted by the vehicle 3 to the supply device 5 include the vehicle identification information, WPT power classes, an air gap class, WPT operating frequencies, a WPT frequency adjustment, a WPT type, WPT circuit topology, a fine positioning method, a pairing method, an alignment method, presence/absence information of a power adjustment function, and the like.

Elements of the compatibility information transmitted by the supply device 5 to the vehicle 3 include supply device identification information, WPT power classes, an air gap class, WPT operating frequencies, a WPT frequency adjustment, a WPT type, WPT circuit topology, a fine positioning method, a pairing method, an alignment method, presence/absence information of a power adjustment function, and the like.

Each element name will be described in detail. Each element of the compatibility information transmitted from the vehicle 3 to the supply device 5 will be described, and a description of what overlaps with the compatibility information transmitted from the vehicle 3 to the supply device 5 in the compatibility information transmitted from the supply device 5 to the vehicle 3 will be omitted.

The air gap class is information indicating an air gap class in which the secondary device 22 can receive power. The WPT power class is information indicating a power class in which the secondary device 22 can receive the power. The WPT operating frequencies are information indicating frequencies of the reception power received by the secondary device 22. The WPT frequency adjustment is information indicating whether the operating frequency can be adjusted. The WPT type is information indicating the shape type of the reception-side resonant circuit 410, and indicates a coil shape of the secondary coil 21. Examples of the WTP type include a circle and a solenoid. The WPT circuit topology is information indicating a connection structure between the secondary coil 21 and the resonant capacitor. As the WTP circuit topology, there are series and a parallel. The fine positioning method is information indicating how to perform alignment when performing the alignment. The pairing method is a method in which the vehicle 3 performs pairing of specifying the supply device 5. The alignment method indicates a method of relatively confirming positions of the secondary device 22 and the primary device 13 before starting the power transmission.

The fine positioning A120 will be described. The vehicle 3 performs the fine positioning A120 prior to the pairing and alignment check A130 or in parallel with these activities. When determining that the vehicle 3 has approached or entered the region where the supply device 5 is installed (WPT lane), the vehicle ECU 330 starts the fine positioning A120.

The vehicle ECU 330 guides the vehicle 3 and aligns the primary device 13 and the secondary device 22 within a range in which sufficient magnetic coupling for the wireless power transfer is established.

The fine positioning A120 is basically performed on the side of the vehicle 3 manually or automatically. The fine positioning A120 can cooperate with an automated driving assistance system (ADAS).

The activity of the fine positioning A120 continues until the vehicle 3 leaves the D-WPT charging site or the state changes to the termination of the communication, and can be executed on the basis of alignment information transmitted from the supply device 5 to the vehicle 3 by the wide-area wireless communication. The termination of the communication is the termination of the D-WPT service session A80.

The pairing and alignment check (Pairing/Alignment check) A130 will be described. Here, the pairing (Pairing) and the alignment check (Alignment check) will be separately described.

The pairing will be described. A P2PS interface that performs the narrow-area wireless communication ensures that the primary device 13 and the secondary device 22 are uniquely paired. A process of the pairing state is as follows.

The vehicle ECU 330 recognizes that the vehicle 3 has approached or entered the D-WPT lane. For example, the vehicle ECU 330 has map information including the D-WPT lane, and performs comparison with position information of the own vehicle, the position information being acquired by the GPS receiver 360, and recognizes the approach or entry according to a straight line distance or the like therebetween. The vehicle 3 transmits, to the server 30, which D-WPT lane the vehicle 3 approaches by the wide-area wireless communication. In short, the third communication device 340 notifies a cloud of a signal indicating that the vehicle 3 approaches any of the D-WPT lanes. Furthermore, in a case where the vehicle ECU 330 recognizes the approach or entry of the vehicle 3 to the D-WPT lane, the fourth communication device 350 starts transmitting a modulation signal at certain intervals for pairing of the primary device 13 and the secondary device 22.

The supply device 5 may recognize that the vehicle 3 has approached or entered the D-WPT lane by using the information acquired from the server 30 by the wide-area wireless communication. The server 30 allocates the vehicle identification information of the approaching vehicle 3 in each D-WPT lane to the supply device 5 corresponding to the lane. Since the supply device 5 only needs to refer to the vehicle identification information the number of pieces of which is reduced by the server 30, authentication processing can be performed in short time. In a case where the supply device 5 recognizes that the vehicle 3 is approaching the D-WPT lane, the second communication device 130 enters a stand-by mode. In the stand-by mode, waiting for reception of the modulation signal from the fourth communication device 350 of the vehicle 3 is performed. The modulation signal includes the vehicle identification information.

When the second communication device 130 receives the modulation signal from the vehicle 3, the supply device 5 compares the vehicle identification information received by the narrow-area wireless communication with the vehicle identification information in the identification information list acquired as a result of the wide-area wireless communication with a plurality of the vehicles 3 heading for the D-WPT lane. By this comparison, the supply device 5 identifies the vehicle 3.

When recognizing that the vehicle 3 is outside the D-WPT lane, the vehicle ECU 330 stops transmitting the modulation signal from the fourth communication device 350. The vehicle ECU 330 can determine whether the D-WPT lane is passed through on the basis of the map information and the position information of the own vehicle.

In a case of determining that the vehicle 3 is not traveling on the D-WPT lane or determining that the vehicle 3 is not approaching the D-WPT lane, the supply device 5 stops waiting for the modulation signal from the fourth communication device 350.

The pairing is executed on the primary device 13 until the vehicle 3 goes out of the D-WPT charging site or the state changes to the termination of the communication. When the pairing (Pairing) is completed, the state transitions to the alignment check (Alignment check).

The alignment check will be described. The alignment check is to confirm that a distance between the primary device 13 and the secondary device 22 in the lateral direction is within an acceptable range. The alignment check is performed by utilization of the narrow-area wireless communication (P2PS).

The alignment check is continuously executed on the basis of P2PS until the vehicle 3 leaves the D-WPT charging site or the state changes to the termination of the communication. A result of the alignment check can be transmitted from the first communication device 120 to the third communication device 340 by the wide-area wireless communication.

The magnetic coupling check A140 will be described. In the magnetic coupling check A140, the supply device 5 confirms a magnetic coupling state and confirms that the secondary device 22 is within an acceptable range. When the magnetic coupling check A140 terminates, the state transitions to the execution of the power transfer A150.

The execution of the power transfer A150 will be described. In this state, the supply device 5 performs the power transfer to the power reception device 20. The power transmission device 10 and the power reception device 20 need to have capability of controlling transfer power (transmission power and reception power) for usefulness of the MF-D-WPT and protection of the power reception device 20 and the battery 320. The larger power transfer helps to increase a traveling distance without static wireless charging and conductive charging of the power reception device 20. However, capacity of the battery 320 varies depending on a vehicle type of the vehicle 3, and an operating power demand may fluctuate rapidly. Examples of this rapid fluctuation include sudden regenerative braking. In a case where the regenerative braking is performed while the vehicle is traveling in the D-WPT lane, the regenerative braking is prioritized. Thus, the reception power from the power reception device 20 is supplied to the battery 320 in addition to regenerative power. In this case, it is necessary to adjust the transfer power by the power reception device 20 in order to protect the battery 320 from overcharge.

In this state, communication is not newly started between the supply device 5 and the power reception device 20 despite the necessity of the power control. This is because the communication may damage a response and accuracy in the power control due to its instability and latency. Thus, the supply device 5 and the power reception device 20 perform the power transfer and control thereof on the basis of known information up to this state.

The supply device 5 increases the transfer power of the magnetic coupling check in response to a power request transmitted from the third communication device 340 in advance by utilization of the wide-area wireless communication. The supply device 5 keeps current and voltage fluctuations within the range and tries to maximize the power transferred during the transition.

The power reception device 20 basically receives transmission power from the power transmission device 10 without performing any control. However, the power reception device 20 starts the control in a case where the transmission power exceeds or is about to exceed a limit such as rated power of the battery 320 which power fluctuates according to a state of charge or the operating power demand of the vehicle 3. In addition, the power control in the vehicle ECU 330 is also required to cope with malfunction in the wide-area wireless communication. This malfunction leads to a contradiction between a power control target in the primary device 13 and the request from the third communication device 340, and a sudden failure of the power reception device 20 or the battery 320 during the power transfer. The power reception device 20 controls the power transferred under a power request rate notified by the first communication device 120.

The power request is determined on the basis of compatibility check information such as the WPT circuit topology, geometry, ground clearance, and electromagnetic compatibility (EMC) of the vehicle 3 and the primary device 13. The magnetic field varies depending on these specifications, and it is necessary to transfer power within a range satisfying the EMC.

The power control in the power transmission ECU 110 and the power reception device 20 may interfere with each other. Specifically, in a case where the supply device 5 tries to realize a power request larger than the latest power limit in the power reception device 20 by the wide-area wireless communication, there is a possibility of the interference. An example of this is rapid regenerative control with a relatively small battery 320 in the vehicle 3. When possible, it is desirable that the supply device 5 can detect a mismatch between a power supply control target and the limit and adjust the power transfer in order to eliminate the mismatch.

For example, when the power transfer is interrupted for a short period while the secondary device 22 is still above the primary device 13, for example, in a case where a foreign object on the primary device 13 is detected by the foreign object detection device 140 or in a case where a coupling coefficient of the magnetic coupling is reduced due to misalignment of the secondary device 22, the state transitions to the standing by (Stand-by) A160. In a case where the foreign object detection device is provided in the vehicle 3, the foreign object may be detected on the side of the vehicle 3.

When the secondary device 22 passes over the primary device 13, the state transitions to the termination of the power transfer A170. In this case, since the magnetic coupling between the two devices is weakened, the transferred power is reduced. Since the supply device 5 can detect that the magnetic coupling is weakened by monitoring the transfer power, the supply device 5 basically determines the state transition to the termination of the power transfer A170 and then starts lowering the voltage to stop the power transfer.

The standing by A160 will be described. In this state, when the power transfer is interrupted for short time for some reason and both the vehicle 3 and the supply device 5 are ready for the D-WPT, the state returns to the execution of the power transfer A150. In a case where there is a possibility that the power transfer is interrupted, the state becomes the standing by A160.

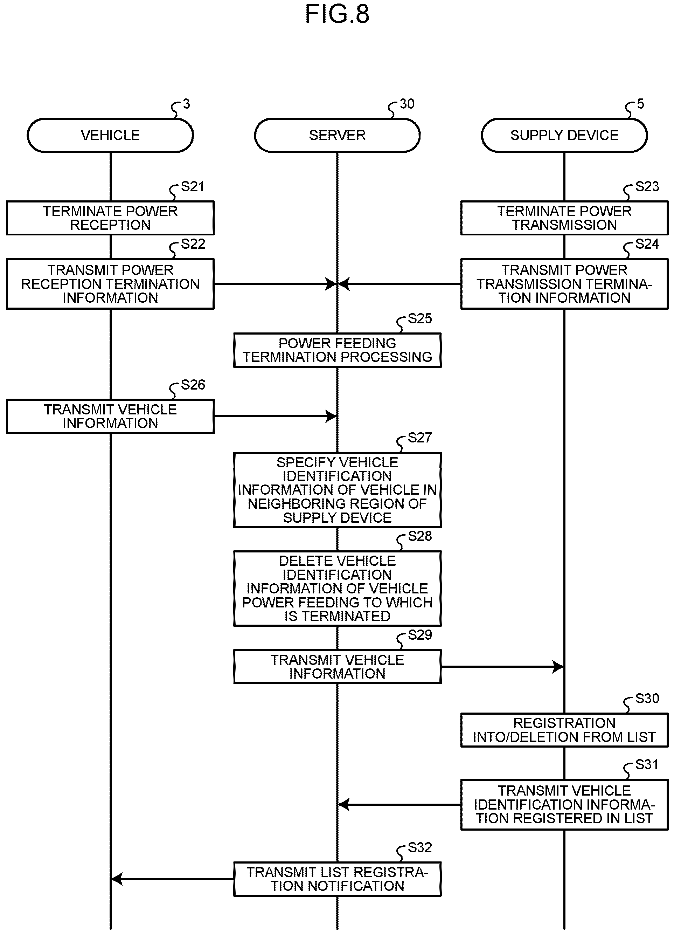

The termination of the power transfer A170 will be described. In this state, the supply device 5 reduces the transferred power to zero, and holds or uploads power transfer result data such as total transfer power, power transfer efficiency, and a failure history. Each piece of data is tagged with the vehicle identification information. Finally, the supply device 5 deletes the vehicle identification information of the vehicle 3 that has passed through the D-WPT lane. Thus, the supply device 5 can prepare for the pairing and the power transfer to be performed on another vehicle thereafter. A processing sequence of the termination of the power transfer A170 is illustrated in FIG. 8.

FIG. 8 is a sequence diagram illustrating an operation after the power feeding from the supply device to the vehicle during traveling is terminated. When the power reception from the supply device 5 terminates in the power reception device 20 of the vehicle 3 (Step S21), the vehicle 3 transmits power reception termination information to the server 30 (Step S22). In Step S22, the power reception termination information is transmitted from the third communication device 340 of the vehicle 3. The power reception termination information includes, for example, the vehicle identification information of the vehicle 3, the reception power from the supply device 5, power reception efficiency, and an abnormality detection result as information related to the power reception from the supply device 5.

When the processing of Step S21 is performed, the supply device 5 terminates the power transmission to the vehicle 3 (Step S23). The processing in Step S21 and the processing in Step S23 may or may not be performed simultaneously. When the processing of Step S23 is performed, the supply device 5 transmits power transmission termination information to the server 30 (Step S24). In Step S24, the power transmission termination information is transmitted from the first communication device 120 of the supply device 5.

When receiving the power reception termination information from the vehicle 3 and receiving the power transmission termination information from the supply device 5, the server 30 performs power feeding termination processing of terminating the power feeding from the supply device 5 to the vehicle 3 (Step S25). In the power feeding termination processing, on the basis of the power reception termination information and the power transmission termination information, processing of calculating a power supply amount from the supply device 5 to the vehicle 3 and processing of charging a user of the vehicle 3 which processing is based on the calculated power supply amount are performed.

The vehicle 3 transmits the vehicle information to the server 30 regardless of the power feeding termination processing (Step S26). In Step S26, the vehicle information is transmitted from the third communication device 340 of the vehicle 3.

When receiving the vehicle information from the vehicle 3 after performing the power feeding termination processing, the server 30 specifies the vehicle identification information of the vehicle 3 located in the neighboring region of each supply device 5 on the basis of the vehicle information (Step S27).

When the power feeding termination processing on a certain vehicle 3 has already been performed in a certain supply device 5, the server 30 deletes the vehicle identification information of the vehicle 3, in which the power feeding termination processing has already been performed, from the vehicle identification information of the vehicle 3 in the neighboring region of the supply device 5 specified in the processing of Step S27 (Step S28).

The server 30 transmits, to each supply device 5, the vehicle information associated with the vehicle identification information not deleted in the processing of Step S28 in the vehicle identification information of the vehicle 3 specified to be located in the neighboring region of each supply device 5 (Step S29).

After the vehicle information is transmitted to each supply device 5 in the processing of Step S29, when the supply device 5 receives the vehicle information from the server 30, the supply device 5 registers/deletes the vehicle identification information in/from the identification information list (Step S30). The processing in Step S30 is similar to the processing in Step S14 in FIG. 7. Then, the supply device 5 transmits the vehicle identification information registered in the identification information list to the server 30 (Step S31). The processing in Step S31 is similar to the processing in Step S15 in FIG. 7.

When receiving the vehicle identification information from the supply device 5, the server 30 transmits the list registration notification to the vehicle 3 corresponding to the vehicle identification information registered in the identification information list (Step S32). The processing in Step S32 is similar to the processing in Step S16 in FIG. 7.

As a result, in a case where the processing illustrated in FIG. 8 is performed, the vehicle identification information of the vehicle 3 which is located in the neighboring region of each supply device 5, the power feeding from the supply device 5 not being terminated, and a deletion request for the vehicle identification information of which is not made is registered in the identification information list. In a case where the vehicle identification information of the vehicle 3 is registered in the identification information list of any of supply devices 5, the vehicle 3 receives the list registration notification. Thus, the vehicle ECU 330 can determine that the own vehicle is registered in any of the supply devices 5 by receiving the list registration notification. Then, in a case where the vehicle 3 goes out of the neighboring region of the supply device 5, the vehicle identification information of the vehicle 3 is deleted from the identification information list of the supply device 5.

FIG. 6 is referred to again. At the termination of the power transfer A170, the power reception device 20 does not need to do anything to make the transfer power zero. The P2PS interface is kept active when the vehicle 3 is in the D-WPT lane, and the state of the power reception device 20 automatically transitions to the pairing for a power transfer from a next primary device 13. As indicated by the transition line illustrated in FIG. 6, the state transitions from the termination of the power transfer A170 to the pairing and alignment check A130. As illustrated in FIG. 6, when a predetermined transition condition is satisfied, it is possible to transition from the magnetic coupling check A140 to the pairing and alignment check A130 and transition from the execution of the power transfer A150 to the pairing and alignment check A130. The pairing may be individually performed on a plurality of the primary coils 11, or the plurality of primary coils 11 may be bundled and the pairing may be performed at a representative point.

In a case where there is no D-WPT request from the vehicle ECU 330, or in a case where a series of states from setting communication and requesting the D-WPT service A60 to the termination of the power transfer A170 is prohibited, the D-WPT service session A70 transitions to the termination of the D-WPT service session A80 and stops the wide-area wireless communication between the first communication device 120 and the third communication device 340. For example, the D-WPT stops when a state of charge in the battery 320 is too high or when the power reception device 20 is too hot due to the continuous power transfer. Such an unnecessary D-WPT can be disabled simply by deactivation of the P2PS interface. However, by stopping the wide-area wireless communication, the power transmission ECU 110 can release a memory occupied for the vehicle 3 by terminating the established wide-area wireless communication without requiring the D-WPT.

The D-WPT service session A70 is not limited to transition in a manner of the transition line illustrated in FIG. 6. In the D-WPT service session A70, when the activity in and after the pairing and alignment check A130 terminates, in a case where a condition that the power transfer process stays in the D-WPT service session A70 is satisfied, transition is performed not to the termination of the D-WPT service session A80 but to the compatibility check and service authentication A110. For example, in a case where a predetermined transition condition is satisfied in the state of the magnetic coupling check A140, the state can transition to the compatibility check and service authentication A110. The transition of each activity in the D-WPT service session A70 is controlled by the control device of the wireless power transfer system 1. The control device of the wireless power transfer system 1 includes the power transmission ECU 110 and the vehicle ECU 330. The power transmission ECU 110 has a function as a control device of the supply device 5. The vehicle ECU 330 includes a function as a control device of the power reception device 20.

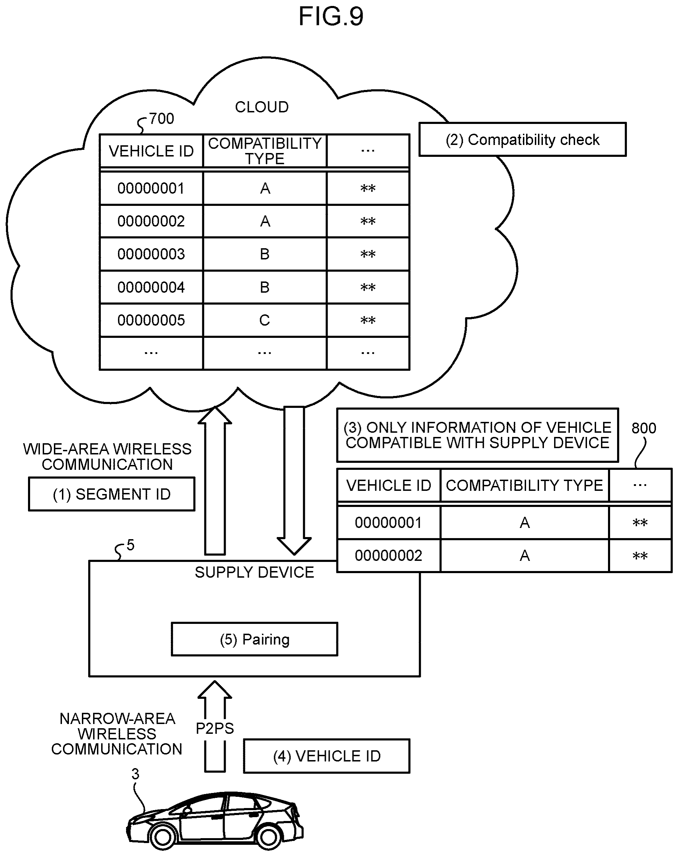

FIG. 9 is a schematic diagram for describing a flow of information in which flow the wide-area wireless communication and the narrow-area wireless communication are used in the wireless power transfer system.

The wireless power transfer system 1 includes a cloud and an edge in the wide-area wireless communication. In the wireless power transfer system 1, the cloud includes the server 30, and the edge includes the vehicle 3 and the supply device 5. The wireless power transfer system 1 is configured to perform the compatibility check (Compatibility check) in two stages of the server 30 and the supply device 5 with respect to the compatibility check (Compatibility check) and service authentication (Service authentication) A110.

In a case where the own vehicle can receive power, the vehicle 3 transmits the vehicle identification information to the server 30 while traveling. The own vehicle being able to receive the power means that it is determined that the power reception device 20 and the battery 320 are in a normal state and charging can be performed on the basis of the SOC of the battery 320. The vehicle 3 capable of receiving the power transmits the vehicle identification information to the server 30.

The server 30 receives the vehicle identification information of the vehicle 3 capable of receiving the power by the wide-area wireless communication, and lists information related to the vehicle 3 together with the vehicle identification information (Compatibility check). The information related to the vehicle 3 includes compatibility information of the power reception device 20, and information indicating a compatibility type of the power reception device 20.

Specifically, in a case of receiving the vehicle identification information, the server 30 determines that the vehicle 3 is a vehicle capable of receiving the power, and registers the vehicle identification information in an identification information list 700. The identification information list 700 includes the vehicle identification information, the compatibility type, and the compatibility information of the power reception device 20. Since the server 30 registers the vehicle information in the identification information list 700 every time the vehicle identification information is received, the identification information list 700 is updated in real time to a list including the information of the vehicle 3 that can receive the power.

In the identification information list 700, the compatibility type of the power reception device 20 and the compatibility information of the power reception device 20 are registered in association with the vehicle identification information. For example, in a case where the one vehicle 3 is equipped with a plurality of the power reception devices 20, the identification information list 700 may be configured in a state in which the compatibility type and the compatibility information of each of the power reception devices 20 are associated with one piece of the vehicle identification information.

The compatibility type is information used for the compatibility check (Compatibility check), and can be grouped, for example, as "A", "B", or "C". The compatibility type is classified into types on the basis of the elements of the compatibility information, such as the air gap class and the WPT type.

The air gap class is information indicating an air gap class in which the secondary device 22 can receive power. For example, the air gap class is indicated by Z1, Z2, Z3, or the like. As an example, Z1 is 50 mm ≤ h ≤ 110 mm, Z2 is 100 mm ≤ h ≤ 160 mm, and Z3 is 130 mm ≤ h ≤ 210 mm. h is a distance between the secondary coil 21 and the primary coil 11 in the vertical direction.

The WPT type is information indicating the shape type of the reception-side resonant circuit 410, that is, the coil shape of the secondary coil 21. The WTP type is indicated by a circle, a solenoid, or the like.

For example, in a case where the WPT type is circular and the air gap class is Z1, the compatibility type is classified as "A". Similarly, the compatibility type is classified as "B" in a case where the WPT type is circular and the air gap class is Z2, and the compatibility type is classified as "C" in a case where the WPT type is circular and the gap class is Z3. In addition, when the air gap class is one of Z1, Z2, or Z3 in a case where the WPT type is a solenoid, the compatibility type is classified into "D", "E", or "F".

The compatibility information registered in the identification information list 700 only needs to include any one of the elements of the compatibility information. The elements of the compatibility information include the WPT power classes, the air gap class, the WPT operating frequencies, the WPT frequency adjustment, the WPT type, the WPT circuit topology, the fine positioning method, the pairing method, the alignment method, the presence/absence information of the power adjustment function, and the like.

The supply device 5 transmits information related to the supply device 5 to the server 30 together with the supply device identification information by the wide-area wireless communication. The supply device identification information includes identification information of the segment 7. The information related to the supply device 5 includes the compatibility information of the power transmission device 10. The compatibility information of the power transmission device 10 includes information such as the WPT power classes, the air gap class, and the WPT type. The identification information of the segment 7 may be referred to as a segment ID or segment identification information.

In a case where the supply device 5 includes a plurality of the segments 7, the supply device 5 transmits, to the server 30, identification information of the segment 7 that can perform the wireless power transfer among the plurality of segments 7.

The plurality of segments 7 included in the supply device 5 does not necessarily have the same configuration. For example, in a case where one supply device 5 has three segments 7, a first segment is circular in the WPT type and has the air gap class of Z1, a second segment is circular in the WPT type and has the air gap class of Z1, and a third segment is circular in the WPT type and has the air gap class of Z2, the compatibility type of the first segment is A, the compatibility type of the second segment is A, and the compatibility type of the third segment is B. In this case, the supply device identification information transmitted from the supply device 5 to the server 30 includes information in which information indicating the compatibility type of the first segment and identification information of the first segment are associated with each other, information in which information indicating the compatibility type of the second segment and identification information of the second segment are associated with each other, and information in which information indicating the compatibility type of the third segment and identification information of the third segment are associated with each other.

Timing at which the supply device 5 transmits the supply device identification information including the segment ID to the server 30 is performed regardless of approach of the vehicle 3. That is, the supply device 5 transmits the supply device identification information to the server 30 at timing before a signal from the vehicle 3 by the narrow-area wireless communication is received. For example, the supply device identification information is periodically transmitted from the supply device 5 to the server 30 at predetermined intervals such as once a day or a plurality of times a day. The supply device 5 transmits the supply device identification information including the segment ID and the information indicating the compatibility type to the server 30 with respect to the segment 7 including the currently available primary device 13.

The server 30 lists combinations of the compatible supply device 5 and the vehicles 3 on the basis of the information received from the supply device 5 and the information of the vehicles 3 registered in the identification information list 700, and transmits a compatibility list 800 to the supply device 5. The server 30 performs the compatibility check by listing the combinations of the compatible supply device 5 and the vehicles 3.

Specifically, when receiving the supply device identification information from the supply device 5, the server 30 refers to the identification information list 700 with respect to the vehicles 3 and specifies the vehicles 3 compatible with the supply device 5. At that time, the server 30 extracts information related to the compatible vehicles 3 from the identification information list 700 with matching in the compatibility type being an extraction condition. Then, the server 30 creates the compatibility list 800 including the combinations of the compatible vehicle 3 and the supply devices 5 by using the information extracted from the identification information list 700.

Since the information of the vehicles 3 that can receive the power is aggregated in the server 30, an amount of data included in the identification information list 700 becomes enormous. Thus, in a case where the server 30 transmits the identification information list 700 to the supply device 5 as it is, the traffic between the server 30 and the supply device 5 becomes enormous. Thus, the server 30 extracts only the information of the vehicles 3 compatible with the supply device 5, creates the compatibility list 800, and transmits the compatibility list 800 to the supply device 5. As a result, the traffic between the server 30 and the supply device 5 can be reduced.

When the vehicle 3 approaches the supply device 5, the supply device 5 receives the vehicle identification information transmitted from the vehicle 3 by the narrow-area wireless communication. When receiving the vehicle identification information by the narrow-area wireless communication, the supply device 5 performs pairing with the vehicle 3 by using the compatibility list 800 acquired in advance from the server 30. The supply device 5 refers to the compatibility list 800 on the basis of the vehicle identification information received by the narrow-area wireless communication, and specifies the vehicle information corresponding to the vehicle identification information from the compatibility list 800. That is, the supply device 5 performs the compatibility check (Compatibility check) together with the pairing by using the vehicle identification information and the compatibility list 800. At the timing at which the supply device 5 performs the pairing with the vehicle 3, only transmission and reception of the vehicle identification information by the narrow-area wireless communication are performed as the wireless communication, and the wide-area wireless communication is unnecessary. Thus, it becomes unnecessary to make an inquiry to the server 30 by the wide-area wireless communication every time the pairing is performed, and high responsiveness for the pairing can be secured. The supply device 5 performs the wireless power transfer from the segment 7 to the paired vehicle 3.

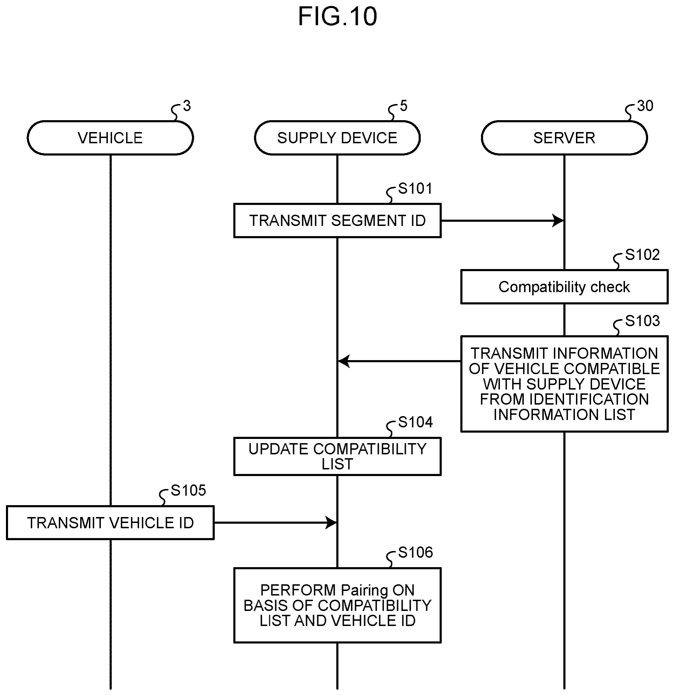

FIG. 10 is a sequence diagram illustrating a case where communication using the wide-area wireless communication is performed between the supply device and the server and a case where communication using the narrow-area wireless communication is performed between the vehicle and the supply device.

The supply device 5 transmits the identification information of the segment 7 to the server 30 by the wide-area wireless communication (Step S101). In Step S101, the supply device identification information including the identification information of the segment 7 is transmitted from the supply device 5 to the server 30.

When receiving the supply device identification information, the server 30 performs the Compatibility check (Step S102). In Step S102, the Compatibility check in a first stage is performed on a side of the server 30. In this Compatibility check, combinations of the compatible vehicles 3 and supply device 5 are listed on the basis of the segment ID included in the supply device identification information and the vehicle information included in the identification information list. In Step S102, the server 30 generates the compatibility list 800 by using the identification information list 700 and the supply device identification information. In a case where the supply device identification information includes a plurality of the segment IDs, the vehicle 3 compatible with each of the segments 7 is specified on the basis of the compatibility type of each of the segment IDs.

The server 30 transmits information of the vehicle 3 compatible with the supply device 5 to the supply device 5 (Step S103). In Step S103, the compatibility list 800 generated in Step S102 is transmitted to the supply device 5.

When receiving the information of the compatible vehicle 3 from the server 30, the supply device 5 updates the compatibility list 800 (Step S104). In Step S104, the compatibility list 800 on the side of the supply device 5 is updated. Each time the compatibility list 800 is received from the server 30, the supply device 5 updates the compatibility list 800 to the latest information, for example, by registration or deletion of the vehicle identification information. The processing from Step S101 to Step S104 is performed by utilization of the wide-area wireless communication between the supply device 5 and the server 30.

The vehicle 3 transmits the vehicle identification information to the supply device 5 by the narrow-area wireless communication (Step S105).

In a case of receiving the vehicle identification information from the vehicle 3 by the narrow-area wireless communication, the supply device 5 refers to the compatibility list 800 and performs pairing with the vehicle 3 having the matching vehicle identification information (Step S106). In Step S106, the pairing is performed with reference to the vehicle information in the compatibility list 800, and power is transferred from the supply device 5 to the vehicle 3 by a method based on the vehicle information.

As described above, according to the wireless power transfer system 1, the two-stage compatibility check can be performed between the server 30 and the supply device 5.

The air gap classes are not limited to Z1, Z2, and Z3. The numerical values are also not limited to 50 mm ≤ h ≤ 110 mm, 100 mm ≤ h ≤ 160 mm, and 130 mm ≤ h ≤ 210 mm. The WPT type is not limited to the circle and the solenoid.

The compatibility type is not limited to the combination of the WPT type and the air gap class. In the wireless power transfer system 1, the compatibility type can be set by utilization of the compatibility information. Furthermore, the information indicating the compatibility type is not limited to classifications such as A, B, and C.

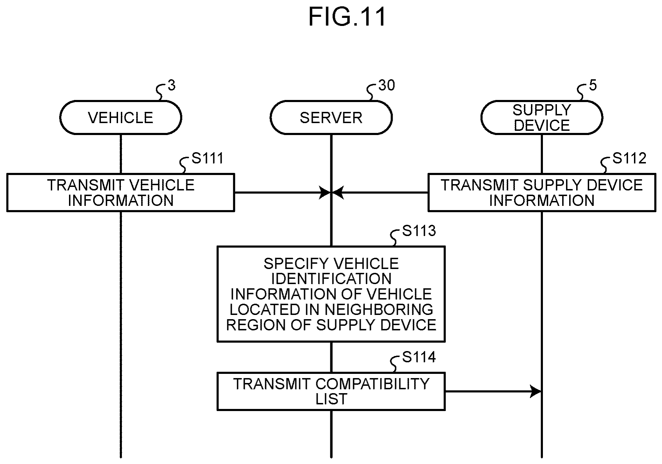

FIG. 11 is a sequence diagram illustrating a case where information processing using the position information is performed.

The vehicle 3 transmits the vehicle information including the position information of the own vehicle to the server 30 (Step S111). In Step S111, the position information indicating the current position of the vehicle 3 is transmitted to the server 30 together with the vehicle identification information.

The supply device 5 transmits supply device information including the position information of the supply device 5 to the server 30 (Step S112). In Step S112, the position information of the supply device 5 is transmitted to the server 30 together with the supply device identification information. The supply device 5 has its own position information.

When receiving the vehicle information from the vehicle 3 and the supply device information from the supply device 5, the server 30 specifies the vehicle 3 located in the neighboring region of the supply device 5 (Step S113). In Step S113, the vehicle identification information of the vehicle 3 located in the neighboring region of the supply device 5 is specified. The neighboring region of the supply device 5 is a region set to include a predetermined range from the supply device 5. This neighboring region is set in advance on the basis of the position information of the supply device 5. For example, the neighboring region of the supply device 5 can be set to a circle having a diameter of a several km to a several tens of km centered on the position of the supply device 5. The server 30 grasps the position of the supply device 5 on the basis of the position information of the supply device 5. In Step S113, in order to specify, for a certain supply device 5, the vehicle 3 to which power may be fed by the supply device 5, the server 30 uses the position information of the vehicle 3 and the neighboring region of the supply device 5 and specifies the vehicle 3 located in the neighboring region.

The server 30 transmits a compatibility list narrowed down to the information of the specified vehicle 3 to the supply device 5 (Step S114). In Step S114, a compatibility list in which the vehicle information is narrowed down for each of the supply devices 5 is transmitted to the supply device 5. The server 30 generates a compatibility list acquired by extraction of the information of the vehicle 3 specified in Step S113 from the compatibility list. The compatibility list transmitted to the supply device 5 in Step S114 is a compatibility list in which information is narrowed down to the vehicles 3 located in the neighboring region of the supply device 5.

According to the wireless power transfer system 1 configured in such a manner, information can be transmitted to the supply device 5 in a form in which the information is divided according to areas and the number thereof is reduced. As a result, the traffic between the supply device 5 and the server 30 can be reduced, and a communication load can be reduced. In a case where all pieces of information is transmitted to all the supply devices 5, the traffic becomes enormous and the communication load increases. In order to prevent this, the wireless power transfer system 1 is configured to specify the vehicle 3 located in the neighboring region of the supply device 5 by using the position information of the vehicle 3 and the position information of the supply device 5, and transmit the compatibility list narrowed to the information of the vehicle 3 from the server 30 to the supply device 5.

In Step S113 illustrated in FIG. 11, in a case where a destination of the vehicle 3 is set, with the supply device 5 present on a scheduled traveling path of the vehicle 3 as a target, the vehicle 3 located in the neighboring region of the supply device 5 may be specified. That is, the server 30 may specify the vehicle 3 located in the neighboring region of the supply device 5 on the basis of the position information of the vehicle 3, the traveling direction of the vehicle 3, and the position information of the supply device 5. In this case, the server 30 transmits the compatibility list to the supply devices 5 installed up to a several km from the current position of the vehicle 3 on the scheduled traveling path of the vehicle 3. As a result, since the supply device 5 through which the vehicle 3 has passed is excluded from the transmission target, unnecessary communication can be controlled, and the traffic can be reduced.

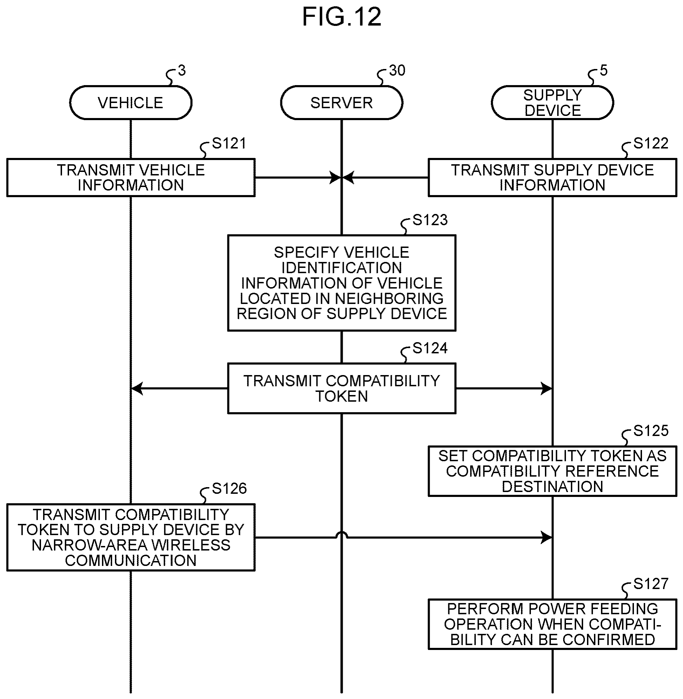

FIG. 12 is a sequence diagram illustrating a case where information processing using a compatibility token is performed. Since Step S121 to S123 illustrated in FIG. 12 are processing similar to that of Step S111 to S113 illustrated in FIG. 11, a description thereof is omitted.

The server 30 transmits the compatibility token to the vehicle 3 specified by the processing of Step S123 and transmits the compatibility token to the supply device 5 corresponding to the neighboring region (Step S124). The compatibility token is a token generated in a case where the vehicle 3 and the supply device 5 are compatible with each other. The server 30 can generate the compatibility token. In Step S124, the server 30 sets the vehicle 3 located in the neighboring region of the supply device 5 as a transmission target, and transmits the compatibility token having compatibility with the supply device 5 corresponding to the neighboring region. Furthermore, the server 30 also transmits the compatibility token to the supply device 5.

When receiving the compatibility token from the server 30, the supply device 5 sets the compatibility token as a compatibility reference destination (Step S125). In Step S125, the compatibility token acquired from the server 30 is set as the reference destination of when the supply device 5 performs the compatibility check. The supply device 5 can perform authentication of the vehicle 3 by using the compatibility token.

When receiving the compatibility token from the server 30, the vehicle 3 transmits information related to the compatibility token to the supply device 5 by the narrow-area wireless communication (Step S126). In Step S126, in the communication with the supply device 5, information related to the compatibility token is transmitted from the vehicle 3 to the supply device 5. The information related to the compatibility token may be the compatibility token itself or may be information generated by the compatibility token.

When receiving the information related to the compatibility token from the vehicle 3, the supply device 5 refers to the compatibility token acquired from the server 30, and proceeds to a power feeding operation on the vehicle 3 in a case where compatibility with the vehicle 3 can be confirmed (Step S127). In Step S127, compatibility checking and pairing using the compatibility token is performed. The supply device 5 confirms consistency of the compatibility token on the basis of the compatibility token acquired from the server 30 by the wide-area wireless communication and the information that is related to the compatibility token and acquired from the vehicle 3 by the narrow-area wireless communication. That is, compatibility of the vehicle 3 is confirmed. Then, in a case where the compatibility is confirmed, the supply device 5 performs a power supply operation on the vehicle 3.

As illustrated in FIG. 12, the server 30 generates the compatibility token on the basis of information acquired from the vehicle 3 and the supply device 5, and transmits the compatibility token to the vehicle 3 located in the neighboring region of the supply device 5 and the supply device 5 corresponding to the neighboring region. Then, the supply device 5 confirms the compatibility with the vehicle 3 according to the consistency of the compatibility token.

According to the wireless power transfer system 1 configured in such a manner, device authentication is performed by utilization of the compatibility token uniquely updated in a predetermined region that is the inside of the neighboring region. Thus, the security is improved.

The compatibility token may be information that itself performs an authentication function, or may be what generates authentication information such as a one-time password. The compatibility token may also be generated individually for the vehicle 3. Alternatively, the compatibility token common to the plurality of vehicles 3 may be used depending on a fee system of the wireless power transfer. The compatibility token may also be transmitted together with the compatibility list.

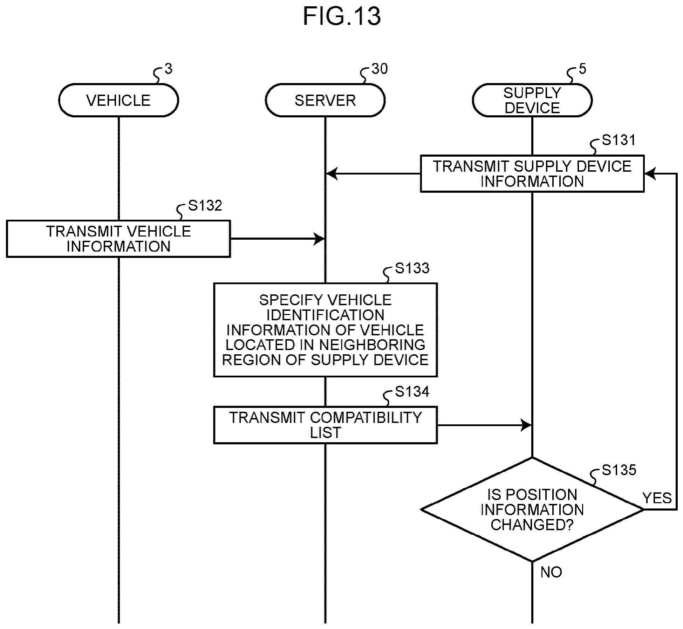

FIG. 13 is a sequence diagram for describing timing at which the supply device transmits the supply device information. Since Step S132 to S134 illustrated in FIG. 13 are processing similar to that of Step S111, and S113 to S114 illustrated in FIG. 11, a description thereof is omitted.

The supply device 5 transmits the supply device information including the own position information to the server 30 (Step S131). The supply device information includes identification information, a model, a laying date, position information, normality notification, abnormality notification, a power supply amount, and the like. In Step S131, the position information of the supply device 5 is transmitted to the server 30 together with the supply device identification information. There is a plurality of kinds of transmission timing of the supply device information in Step S131. The supply device 5 can transmit information to the server 30 at the plurality of kinds of timing. The transmission timing of the supply device information in Step S131 includes the time of laying on the ground. Thus, in Step S131, the position information is transmitted to the server 30 together with the supply device identification information at the timing at which the supply device 5 is laid on the ground.

After receiving the compatibility list from the server 30, the supply device 5 determines whether there is a change in the own position information (Step S135).

In a case where there is the change in the position information of the supply device 5 (Step S135: Yes), this control routine returns to Step S131. In this case, in Step S131, the supply device 5 transmits the supply device information including change information of the position information to the server 30. That is, the transmission timing of the supply device information in Step S131 includes the time of changing the position information. Thus, in Step S131, new position information is transmitted to the server 30 together with the supply device identification information at the timing at which the information on the supply device 5 is changed. Then, in a case of receiving the change information of the position information from the supply device 5, the server 30 updates the position information of the supply device 5 on the basis of the change information.

On the other hand, in a case where there is no change in the position information of the supply device 5 (Step S135: No), this control routine is ended.

As illustrated in FIG. 13, the supply device 5 transmits the supply device information to the server 30 at the time of laying, and transmits the change information to the server 30 in a case where there is a change in the position information. In the supply device information, the model and the laying date are fixed, and the position information is not changed that frequently although there is a possibility to be changed. Thus, by using the time of changing the position information as a transmission trigger, a transmission frequency from the supply device 5 to the server 30 is reduced, and a communication load can be reduced. In short, as long as the position information is not changed, the supply device information needs to be transmitted from the supply device 5 to the server 30 only once at the time of laying.

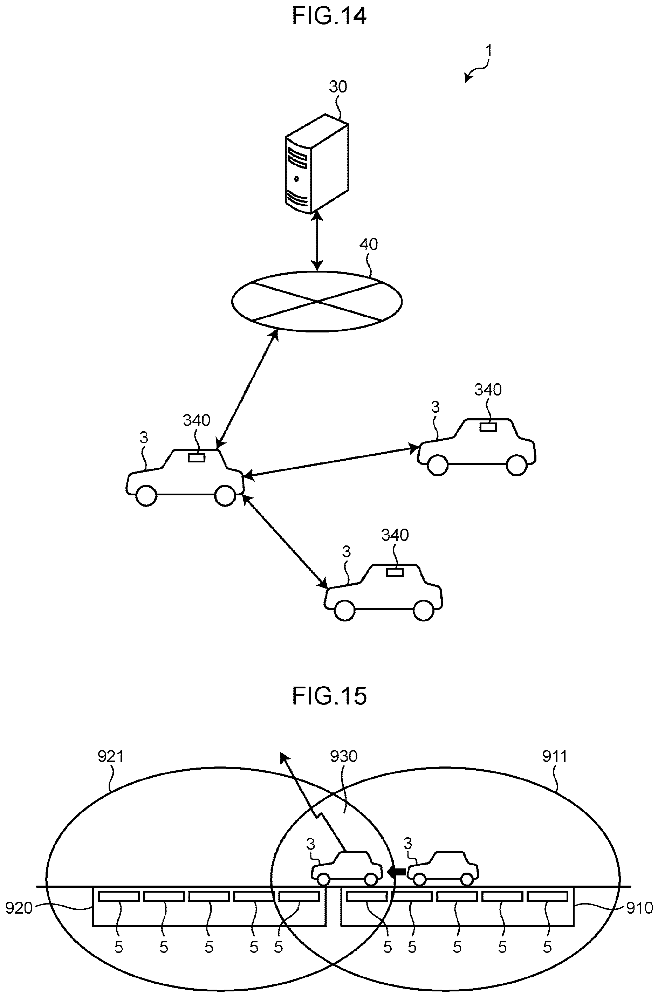

FIG. 14 is a schematic diagram illustrating a case where a vehicle representing a plurality of vehicles performs the wide-area wireless communication with a server.

As illustrated in FIG. 14, the vehicle 3 can perform communication with another vehicle 3 traveling near the own vehicle (vehicle-to-vehicle communication). In the vehicle-to-vehicle communication, vehicle information of the own vehicle can be transmitted to the other vehicle 3, and vehicle information of the other vehicle 3 can be received. Then, the vehicle 3 that represents the plurality of vehicles 3 capable of performing the vehicle-to-vehicle communication collectively transmits the vehicle information of each of the plurality of vehicles 3 to the server 30 by the wide-area wireless communication. In a case of receiving the vehicle information of the plurality of vehicles 3 from the representative vehicle 3, the server 30 transmits the compatibility list corresponding to the plurality of vehicles 3 to the representative vehicle 3. The representative vehicle 3 receives the compatibility lists corresponding to the plurality of vehicles 3 from the server 30. Then, the representative vehicle 3 transmits the compatibility list acquired from the server 30 to the other vehicle 3 that has performed the vehicle-to-vehicle communication.

As described above, the representative vehicle 3 among the plurality of vehicles 3 communicates with the server 30, and the communication frequency between the server 30 and the vehicle 3 can be reduced since the communication by the representative vehicle 3 becomes a hub. Thus, since the number of communication partners with respect to the server 30 in the wide-area wireless communication is reduced, the communication frequency can be reduced.

The plurality of vehicles 3 and the representative vehicle 3 can be, for example, the vehicles 3 that can continue the vehicle-to-vehicle communication for predetermined time, such as the vehicles 3 traveling on an expressway in the same traveling direction. In short, it is possible to apply a hub of the communication by the representative vehicle 3 not only on the expressway but also in a case where platooning is performed.

The information acquired from the server 30 by the vehicle 3 representing the plurality of vehicles 3 by the wide-area wireless communication is not limited to the compatibility list, and may be a compatibility token. In this case, the representative vehicle 3 transmits the compatibility token acquired from the server 30 to the other vehicle 3 that has performed the vehicle-to-vehicle communication when the vehicle information is collected.

A trigger for updating the information registered in the server 30 will be described. The trigger includes a case where the side of the server 30 serves as a trigger, a case where the vehicle 3 side serves as the trigger, and a case where the side of the supply device 5 serves as the trigger as illustrated in FIG. 13.

For example, in a case where the side of the server 30 serves as the trigger, the server 30 updates the compatibility list or the compatibility token every time predetermined time elapses. In this case, the server 30 updates the compatibility list or the compatibility token on the basis of the change information received from the vehicle 3 and the supply device 5 until the predetermined time elapses from previous update timing. The update target may be both a compatibility rill and the compatibility token.

In a case where the side of the vehicle 3 serves as the trigger, the vehicle 3 transmits the vehicle information to the server 30 every predetermined time, and updates the vehicle information to the server 30.

Examples of the case where the side of the vehicle 3 serves as the trigger include timing at which the vehicle 3 moves only for a predetermined distance and timing at which the vehicle 3 enters a predetermined region. As an example in which the vehicle 3 enters the predetermined region, there is a case where the vehicle 3 is traveling in the predetermined region set for a supply device group including a plurality of the supply devices 5.

As illustrated in FIG. 15, a first supply device group 910 and a second supply device group 920 may be present side by side in the traveling direction of the vehicle 3. A first region 911 that is a predetermined region set for the first supply device group 910 and a second region 921 that is a predetermined region set for the second supply device group 920 partially overlap with each other. In this case, the vehicle 3 traveling in the first region 911 corresponding to the first supply device group 910 transmits the vehicle information to the server 30 when entering a region 930 overlapping with the second region 921 corresponding to the second supply device group 920. While traveling on the first supply device group 910, the vehicle 3 transmits the vehicle information to the server 30 in front of the second supply device group 920.

The first region 911 may be a neighboring region of the supply device 5 included in the first supply device group 910. The second region 921 may be a neighboring region of the supply device 5 included in the second supply device group 920. In addition, the vehicle position may be specified by utilization of a GPS, or may be predicted by utilization of a traveling distance, a vehicle speed, and the like.

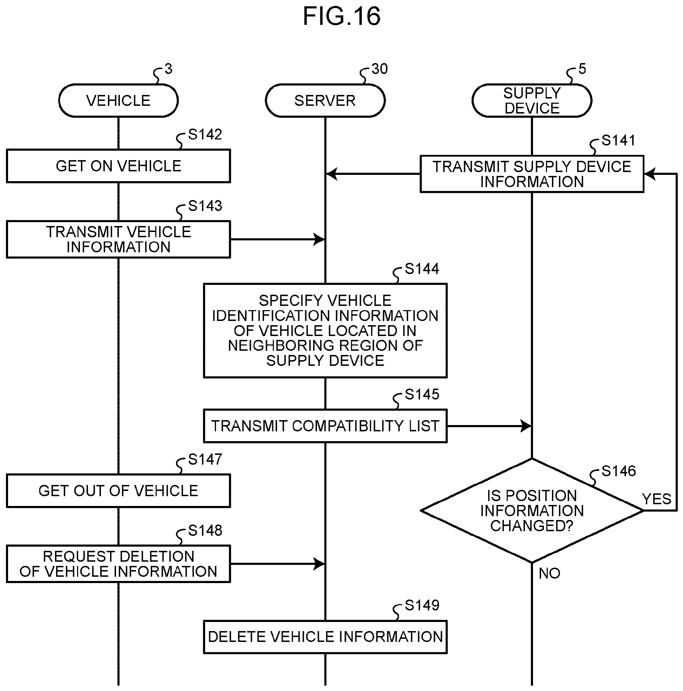

FIG. 16 is a sequence diagram illustrating a case where vehicle information is deleted. Since Step S141 and S144 to S146 illustrated in FIG. 16 are processing similar to that of Step S131 and S133 to S135 illustrated in FIG. 13, a description thereof is omitted.

When detecting that an occupant gets on the own vehicle (Step S142), the vehicle 3 transmits the vehicle information to the server 30 (Step S143).

When detecting that the occupant gets out of the own vehicle (Step S147), the vehicle 3 transmits a signal requesting deletion of the vehicle information (information deletion request signal) to the server 30 (Step S148).

When receiving the information deletion request signal from the vehicle 3, the server 30 deletes the vehicle information corresponding to the vehicle 3 that has transmitted the request signal from the compatibility list (Step S149).

Since the unnecessary vehicle information is deleted from the compatibility list in such a manner, the amount of information of the compatibility list transmitted to the supply device 5 can be reduced.

Step S142 is not limited to detecting that the occupant gets on the vehicle 3, and may be detecting that the vehicle 3 is activated. In this case, in Step S143, the vehicle information is transmitted to the server 30 at timing at which the activation of the vehicle 3 is detected. Similarly, Step S147 is not limited to detecting that the occupant gets out of the vehicle 3, and may be detecting that traveling of the vehicle 3 is ended. In Step S148, the information deletion request signal is transmitted to the server 30 at timing at which the end of the traveling of the vehicle 3 is detected. That is, in Step S142, it may be detected that an ignition of the vehicle 3 is turned on. In addition, in Step S148, it may be detected that the ignition of the vehicle 3 is turned off.

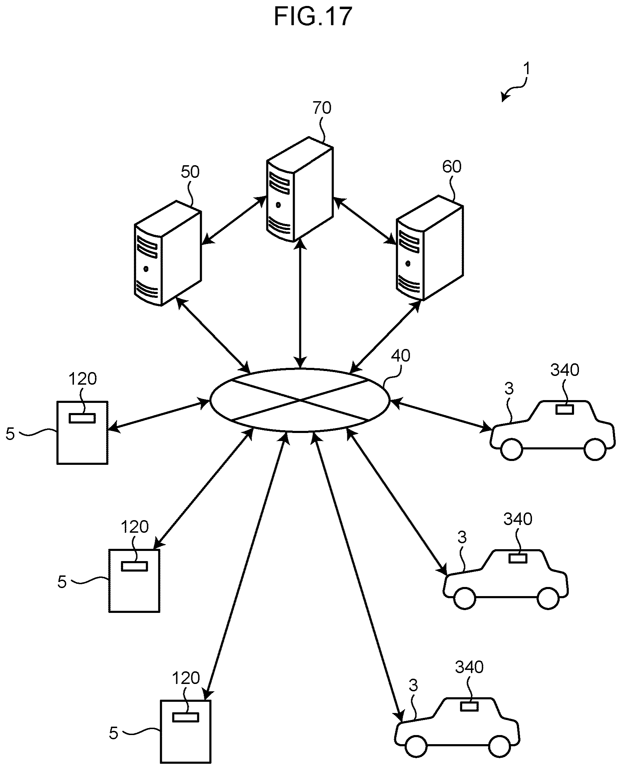

FIG. 17 is a schematic diagram for describing a case where information processing is performed by a plurality of servers.

As illustrated in FIG. 17, the wireless power transfer system 1 includes a first management server 50 that manages the vehicle information, a second management server 60 that manages the supply device information, and a third management server 70 that manages information related to the wireless power transfer.

The first management server 50 is a vehicle information management server. The first management server 50 is communicably connected to the vehicle 3 via the network 40. The first management server 50 receives the vehicle information transmitted from the vehicle 3 and transmits various kinds of information to the vehicle 3. In addition, the first management server 50 and the third management server 70 are communicably connected.

The second management server 60 is a supply device information management server. The second management server 60 is communicably connected to the supply devices 5 via the network 40. The second management server 60 receives the supply device information transmitted from the supply devices 5 and transmits various kinds of information to the supply devices 5. In addition, the second management server 60 and the third management server 70 are communicably connected.

The third management server 70 is a WPT management server. The third management server 70 can transmit and receive information to and from the first management server 50 and the second management server 60. The third management server 70 acquires information related to the wireless power transfer in the vehicle information from the first management server 50, and acquires information related to the wireless power transfer in the supply device information from the second management server 60. Then, the third management server 70 creates and manages the compatibility list on the basis of the information received from the first management server 50 and the second management server 60.

The third management server 70 transmits the compatibility list to the second management server 60. The second management server 60 can perform processing of narrowing down the vehicle information by using the compatibility list acquired from the third management server 70. That is, the second management server 60 can generate the compatibility list for each of the supply devices 5 on the basis of the compatibility list received from the third management server 70. The second management server 60 transmits, to the supply device 5, the compatibility list in which the vehicle information is narrowed down according to the neighboring region. The supply device 5 receives the compatibility list transmitted from the second management server 60.

The third management server 70 may manage not only the compatibility list but also the compatibility token. In this case, the third management server 70 specifies the identification information of the vehicle 3 present in the neighboring region of the supply device 5, and generates the compatibility token having compatibility between the specified vehicle 3 and the supply device 5 in the neighboring region. In addition, the third management server 70 transmits the compatibility token to the first management server 50 and the second management server 60. The first management server 50 transmits the compatibility token acquired from the third management server 70 to the corresponding vehicle 3. The second management server 60 transmits the compatibility token acquired from the third management server 70 to the corresponding supply device 5. Then, the vehicle 3 receives the compatibility token transmitted from the first management server 50. The supply device 5 receives the compatibility token transmitted from the second management server 60.

### Industrial Applicability

According to the present invention, it is possible to provide the wireless power transfer system, the supply device, and the vehicle that can increase responsiveness and reduce traffic in a case where each of the ground-side supply device and the traveling vehicle wirelessly communicates with the server.

### Reference Signs List

- 1: WIRELESS POWER TRANSFER SYSTEM
- 2: SUPPLY EQUIPMENT
- 3: VEHICLE
- 4: ROAD
- 5: SUPPLY DEVICE
- 6: AC POWER SUPPLY
- 7: SEGMENT
- 8: MANAGEMENT DEVICE
- 10: POWER TRANSMISSION DEVICE
- 11: PRIMARY COIL
- 13: PRIMARY DEVICE
- 20: POWER RECEPTION DEVICE
- 21: SECONDARY COIL
- 22: SECONDARY DEVICE
- 110: POWER TRANSMISSION ECU
- 330: VEHICLE ECU
- 240: TRANSMISSION-SIDE RESONANT CIRCUIT
- 410: RECEPTION-SIDE RESONANT CIRCUIT
- 530: POWER TRANSMISSION CONTROL UNIT
- 700: IDENTIFICATION INFORMATION LIST
- 800: COMPATIBILITY LIST

## Claims

1. A wireless power transfer system comprising:
a supply device having a primary coil installed on a road;
a vehicle having a secondary coil that receives power transferred from the primary coil in a non-contact manner; and
a server communicably connected to the supply device and the vehicle by wide-area wireless communication,
wherein
the supply device and the vehicle can communicate with each other by narrow-area wireless communication, and the supply device transfers power in the non-contact manner to the vehicle traveling on the road,
the supply device transmits identification information of the supply device to the server before receiving a signal from the vehicle by the narrow-area wireless communication,
the server transmits, to the supply device, a compatibility list including a combination of the compatible supply device and vehicle on a basis of the identification information of the supply device and information of the vehicle, and
the supply device performs pairing with the vehicle on a basis of the compatibility list in a case of receiving the signal from the vehicle by the narrow-area wireless communication.

2. The wireless power transfer system according to claim 1, wherein
the signal received by the supply device from the vehicle through the narrow-area wireless communication is identification information of the vehicle,
the compatibility list includes the identification information of the vehicle, and
the supply device performs the pairing with the compatible vehicle on a basis of the identification information of the vehicle which information is acquired from the vehicle by the narrow-area wireless communication and the compatibility list acquired from the server in advance by the wide-area wireless communication.

3. The wireless power transfer system according to claim 2, wherein
the server
registers, in a case of receiving vehicle identification information transmitted from the vehicle capable of receiving power, the vehicle identification information in an identification information list including vehicle information associated with the vehicle identification information, and
extracts the information of the vehicle compatible with the supply device from the identification information list and generates the compatibility list in a case where the identification information of the supply device is received.

4. The wireless power transfer system according to claim 1, wherein
the server
specifies the vehicle located in a neighboring region of the supply device on a basis of position information of the supply device and position information of the vehicle, and
transmits the compatibility list focused on the information of the specified vehicle to the supply device corresponding to the neighboring region.

5. The wireless power transfer system according to claim 4, wherein
the server
transmits, to the specified vehicle, a compatibility token compatible with the supply device corresponding to the neighboring region, and
transmits the compatibility token to the supply device corresponding to the neighboring region,
the vehicle transmits information related to the compatibility token to the supply device by the narrow-area wireless communication, and
the supply device performs a power supply operation with respect to the vehicle in a case where compatibility between the compatibility token received from the server and the information that is related to the compatibility token and received from the vehicle is confirmed.

6. The wireless power transfer system according to claim 5, wherein
the supply device
transmits supply device information including the identification information and the position information of the supply device to the server at time of being laid on ground, and
transmits change information of the position information to the server in a case where the position information is changed after the laying on the ground, and
the server
specifies the vehicle located in the neighboring region by using the supply device information, and
updates the compatibility list on a basis of the change information of the position information in a case where the change information of the position information is received.

7. The wireless power transfer system according to claim 6, wherein
the vehicle is capable of transmitting and receiving vehicle information by vehicle-to-vehicle communication with another vehicle traveling near the vehicle,
a vehicle representing a plurality of the vehicles capable of performing the vehicle-to-vehicle communication collectively transmits the vehicle information of each of the plurality of vehicles to the server,
the server transmits the compatibility list corresponding to the plurality of vehicles to the representative vehicle in a case of receiving the vehicle information of the plurality of vehicles from the representative vehicle, and
in a case of receiving the compatibility list corresponding to the plurality of vehicles from the server, the representative vehicle transmits the compatibility list to the plurality of vehicles that has performed the vehicle-to-vehicle communication.

8. The wireless power transfer system according to claim 7, wherein
the server updates the compatibility list or the compatibility token every time predetermined time elapses.

9. The wireless power transfer system according to claim 8, wherein
the vehicle transmits the information of the vehicle to the server every time predetermined time elapses.

10. The wireless power transfer system according to claim 9, wherein
the vehicle transmits the information of the vehicle to the server in a case where the vehicle has traveled a predetermined traveling distance or in a case where the vehicle has entered the neighboring region of the supply device.

11. The wireless power transfer system according to claim 10, wherein
the vehicle
transmits the information of the vehicle to the server when the own vehicle is activated, and
transmits an information deletion request signal to the server when traveling of the own vehicle ends, and
in a case of receiving the information deletion request signal, the server deletes, from the compatibility list, information related to the vehicle that has transmitted the request signal.

12. The wireless power transfer system according to any one of claims 4 to 11, wherein
the server includes
a first management server that manages the information of the vehicle which information is transmitted from the vehicle,
a second management server that manages information of the supply device which information is transmitted from the supply device, and
a third management server that manages information related to a wireless power transfer by the vehicle and the supply device, and
the third management server
acquires, from the first management server, information related to the wireless power transfer in the information of the vehicle,
acquires, from the second management server, information related to the wireless power transfer in the information of the supply device, and
generates the compatibility list on a basis of the information acquired from the first management server and the second management server.

13. A supply device comprising:
a primary device including a primary coil installed on a road;
a first communication device that performs narrow-area wireless communication with a vehicle;
a second communication device that performs wide-area wireless communication with a server; and
a control device that controls the primary device, the first communication device, and the second communication device, wherein
the supply device transfers power in a non-contact manner from the primary coil to the vehicle traveling on the road,
the second communication device
transmits identification information of the supply device to the server before the first communication device receives a signal from the vehicle by the narrow-area wireless communication, and
receives, from the server, a compatibility list in which information of the vehicle compatible with the supply device is listed, and
the control device performs pairing with the vehicle on a basis of the compatibility list in a case where the first communication device receives the signal from the vehicle by the narrow-area wireless communication.

14. The supply device according to claim 13, wherein
the second communication device receives, from the server, the compatibility list narrowed down to the information of the vehicle specified as the vehicle located in a neighboring region of the supply device.

15. The supply device according to claim 14, wherein
the second communication device receives a compatibility token from the server,
the first communication device receives information related to the compatibility token from the vehicle, and
the control device performs a power supply operation on the vehicle in a case where compatibility between the compatibility token received from the server and the information related to the compatibility token and received from the vehicle is confirmed.

16. The supply device according to claim 15, wherein
the supply device
transmits supply device information including identification information and position information of the supply device to the server at time of being laid on ground, and
transmits change information of the position information to the server in a case where the position information is changed after the laying on the ground.

17. A vehicle comprising:
a secondary device including a secondary coil that receives power transferred in a non-contact manner from a primary coil installed on a road;
a third communication device that performs narrow-area wireless communication with a ground-side supply device including the primary coil;
a fourth communication device that performs wide-area wireless communication with a server; and
a control device that controls the secondary device, the third communication device, and the fourth communication device, wherein
the vehicle receives the power transferred from the primary coil in the non-contact manner while traveling on the road,
the fourth communication device transmits, in a case where the vehicle during traveling is in a state of being capable of receiving the power, identification information of the vehicle to the server,
the third communication device transmits the identification information of the vehicle to the ground-side supply device while the vehicle is traveling on the road, and
the control device performs pairing with the supply device by the narrow-area wireless communication with the supply device.

18. The vehicle according to claim 17, wherein
the fourth communication device receives, from the server, a compatibility token for the vehicle located in a neighboring region of the supply device,
the third communication device transmits information related to the compatibility token to the supply device by the narrow-area wireless communication, and
the compatibility token is compatible with the supply device corresponding to the neighboring region.

19. The vehicle according to claim 18, wherein
the third communication device transmits and receives vehicle information to and from another vehicle traveling near the own vehicle by vehicle-to-vehicle communication,
a vehicle representing a plurality of the vehicles capable of performing the vehicle-to-vehicle communication collectively transmits the vehicle information of the plurality of vehicles to the server, and
in a case of receiving a compatibility list corresponding to the plurality of vehicles from the server, the representative vehicle transmits the compatibility list to the plurality of vehicles that has performed the vehicle-to-vehicle communication.

20. The vehicle according to claim 19, wherein
the fourth communication device
transmits information of the vehicle to the server when the own vehicle is activated, and
transmits an information deletion request signal to the server when traveling of the own vehicle ends.
